# EUROPEAN PATENT SPECIFICATION

(11) **EP 2 874 814 B1**
(45) Date of publication and mention of the grant of the patent: **25.05.2016**
(21) Application number: 13747425.0
(22) Date of filing: 12.07.2013
(51) Int. Cl.: B32B 27/08, B32B 27/30, B32B 27/32, G09F 3/02

(54) **A LABEL FACESTOCK**
ETIKETTENTRÄGERMATERIAL
SUPPORT D'ÉTIQUETTE

(30) Priority: 17.07.2012 FI 20125799; 17.07.2012 US 201261672358 P
(43) Date of publication of application: 27.05.2015
(73) Proprietor: UPM Raflatac Oy, 33310 Tampere (FI)
(72) Inventor: SAXBERG, Tom, FI-33230 Tampere (FI); MITCHELL, Noel, 42111 Wuppertal (DE); MANNER, Matti, FI-33270 Tampere (FI); VÄHÄLÄ, Martti, FI-33820 Tampere (FI)
(74) Representative: Tampereen Patenttitoimisto Oy
(86) International application number: PCT/FI2013/050751
(87) International publication number: WO 2014/013133

(56) References cited:
- EP-A2- 0 335 425
- WO-A1-2008/011402

## Description

### Field of the Invention

The present invention relates to labels. More particularly, the invention relates to machine direction oriented multilayer facestock of the label.

### Background of the Invention

It is general practice to apply a label to a surface of an article to provide decoration, and/or to display information about the product being sold, such as the content of the item, a trade name or logo.

WO 2008/011402 A1 discloses a polymeric film for labeling articles comprising a print skin layer including polyethylene, possibly a low density polyethylene, and a polypropylene homopolymer; a core layer including polypropylene copolymer and homopolymer and polyethylene; and adhesive skin layer including a grafted polyolefine. Additional thermoplastic polymers, such as styrene-based polymers, and processing additives may be incorporated into the print skin layer. A method of making whereby the film is oriented in the machine direction by stretching it 2 to 9 times, is as well disclosed therein.

### Summary of the Invention

It is an object to provide plastic films for labels. It is an object of the present invention to provide a facestock of a label which is environmentally friendly and provides adequate properties for labelling applications.

According to a first aspect, a machine direction oriented multilayer facestock for labels is provided. The facestock comprises a core layer having a first surface and a second surface. It further comprises a first skin layer adjoined to the first surface of the core layer and a second skin layer adjoined to the second surface of the core layer. The composition of the first skin layer is different from the composition of the second skin layer and the second skin layer is configured to be in contact with the adhesive layer. The second skin layer includes propylene homopolymer, hydrocarbon resin, styrene block copolymer, and low density polyethylene.

According to a second aspect, a use of a machine direction oriented multilayer facestock for self-adhesive labels is provided.
According to a third aspect, a self-adhesive label comprising an adhesive layer and a machine direction oriented multilayer facestock is provided. The facestock comprises at least a core layer having a first surface and a second surface. Further a first skin layer is adjoined to the first surface of the core layer and a second skin layer is adjoined to the second surface of the core layer. The composition of the first skin layer is different from the composition of the second skin layer and the second skin layer is configured to be in contact with the adhesive layer. The second skin layer comprises propylene homopolymer, hydrocarbon resin, styrene block copolymer, and low density polyethylene.

According to a fourth aspect, a method for manufacturing a machine direction oriented multilayer facestock is provided. The method includes: forming a facestock, wherein the chemical composition of the first skin layer is different from the chemical composition of the second skin layer, said second skin layer comprising propylene homopolymer, hydrocarbon resin, styrene block copolymer, and low density polyethylene and stretching the facestock in machine direction by a longitudinal force by a first roll and a second roll at a stretch ratio of 4:1 to 8:1. The first drawing roll is arranged to be in contact with the first skin layer of the facestock and the second drawing roll is arranged to be in contact with the second skin layer of the facestock. Further the temperature of the first roll is lower than temperature of the second roll.

Further embodiments are presented in the dependent claims.

The second skin layer may comprise between 20 and 60% propylene homopolymer.

The second skin layer may comprise between 5 and 20% hydrocarbon resin.

The second skin layer may comprise styrene block copolymer between 5 and 20%.

The second skin layer may comprise between 1 and 20% of low density polyethylene.

The second skin layer may further comprise linear low density polyethylene. The content of linear low density polyethylene may be between 10 and 30%. The second skin layer may further comprise an antiblocking agent. The content of antiblocking agent may be between 0.05 and 0.5% antiblocking agent.

The first skin layer may comprise propylene homopolymer; and linear low density polyethylene. The first skin layer may comprises between 40 and 80% of a propylene homopolymer. The first skin layer comprises between 10 and 50% of a linear low density polyethylene.

The first skin layer may further comprise an antiblocking agent. The first skin layer may comprise between 0.05 and 0.5% of antiblocking agent.

The facestock may have a tensile modulus ratio of machine direction to transversal direction between 2.0 and 3.8.

The thickness of the first skin layer may be different from the thickness of the second skin layer and the thickness ratio of the first skin layer to second skin layer may be between 1:1 and 1:2.

### Description of the Drawings

In the following examples, the embodiments of the invention will be described in more detail with reference to appended drawings, in which
- Figs. 1a-1f: show examples of a surface treatment method,
- Fig. 1g: shows a flow chart illustration of a surface treatment,
- Fig.3a: shows, in a cross-sectional view, a laminated structure for labels,
- Fig.3b: shows, in a cross-sectional view, a laminated structure comprising die-cut labels,
- Fig. 3c: shows, in a cross-sectional view, separating a release from a label,

- Fig.3d: shows, in a cross-sectional view, a multilayer facestock structure,
- Figs. 3e-3f: show, in a side view, a conformable facestock,
- Fig.3g: shows, in a side view, a label attached to a surface of an item,
- Fig. 4a: shows a flow chart illustration of an example method for providing machine direction oriented facestock,
- Fig 4b: shows an example of the processing system for a machine direction oriented facestock,

### Detailed Description of the Invention

In this description and claims, the percentage values are percentages by weight (wt-%) unless otherwise indicated. The term "conformability" refers to the capability of the label to conform smoothly to the contour of the article even when this is curved in two dimensions. The term "dualistic asymmetric" or "double asymmetric" refers to a multilayer facestock having both different layer thickness and composition of separate layers.

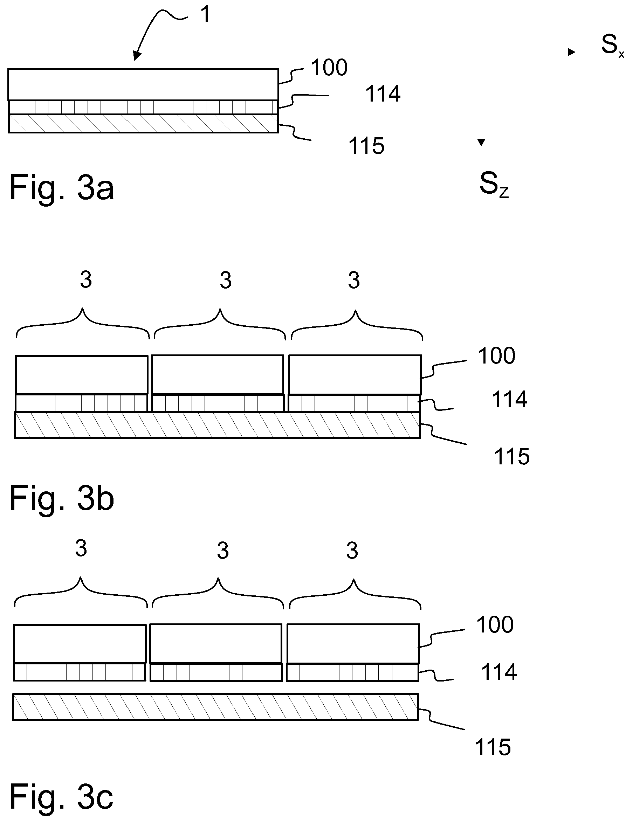

With reference to Fig. 3a, a laminate structure 1 for labels, also referred to as a label laminate or a labelstock, comprises at least a facestock 100. In addition it may comprise an adhesive layer 114. Additionally it may include a release liner 115. In a laminate structure having a release liner, the adhesive layer 114 is between the facestock layer 100 and the release liner 115. The facestock may also be referred to as a face material layer, a face layer or a face film. The liner is mainly used to protect the adhesive layer. It also allows efficient handling of the label up to the point where the label is dispensed from the liner and adhered to a substrate surface. The liner 115 includes a backing material, such as a plastic film or paper substrate, coated with a thin layer of release agent, such as silicone. Therefore, the release liner 115 can be easily removed from the adhesive layer of the label prior to labelling, i.e. before adhering the label to a substrate. The plastic backing material of the release liner may be, for example, a polyester film, a biaxially or machine direction oriented polypropylene film. The thickness of the plastic liner is preferably 20 to 30 microns or even less than 20 microns. Paper substrates may have a thickness between 40 and 60 microns.

Referring to Fig. 3b, individual labels 3 may be cut from the laminate structure 1. In particular, the labels 3 may be die-cut from the structure 1. After the cutting, the labels may be attached to a common liner 115 (the liner remains uncut). Thus, a plurality of labels may remain attached to a common continuous liner 115. Alternatively, the labels 3 may be completely separate (i.e. also the liner 115 may be cut). Referring to Fig. 3c, the labels 3 may be separated from the liner 115 e.g. by pulling the liner 115 in the direction Sz with respect to the label 3. Thus, a surface of the adhesive layer 114 may be exposed so that said surface can be attached to an item.

Thanks to the adhesive layer 114 the label can be affixed to the substrate, i.e. to the surface of an article. The adhesive layer may consist of a pressure sensitive adhesive (PSA). The labels consisting of PSA can be adhered to most surfaces through an adhesive layer without the use of a secondary agent, such as a solvent, or heat to strengthen the bond. The PSA forms a bond when pressure is applied onto the label at room temperature, adhering the label to the product to be labelled. The label comprising pressure sensitive adhesive may be referred to as a pressure sensitive adhesive (PSA) label.

In the following description a label is preferably a self-adhesive label, wherein the label may be used in labelling of articles, such as glass or plastic bottles, packages, or other containers. Also paper or metal based articles may be labelled. The label is suitable for labelling of e.g. home and personal care products, industrial chemical products, pharmaceutical and health care products, beverage and wine bottles, tyres etc. Self-adhesive labels are made from a self-adhesive labelstock (self-adhesive label laminate). The self-adhesive label may comprise a facestock and an activatable adhesive layer. Alternatively, the self-adhesive label may comprise a facestock, a pressure sensitive adhesive (PSA) layer and a release liner, which normally includes silicone. The release liner is removed from the self-adhesive label prior to labelling. In other words, the self-adhesive label may be adhered to the article through an adhesive layer, which adhesive may be either activatable or pressure-sensitive adhesive. Accordingly, the facestock of the self-adhesive label may be laminated with a release liner having a PSA layer in between, or the self-adhesive label may be a linerless facestock including a facestock and an activatable adhesive layer. Thus, a facestock for a self-adhesive labelstock use, also referred to as a label laminate, is provided. Further, a facestock for a self-adhesive label use is provided.

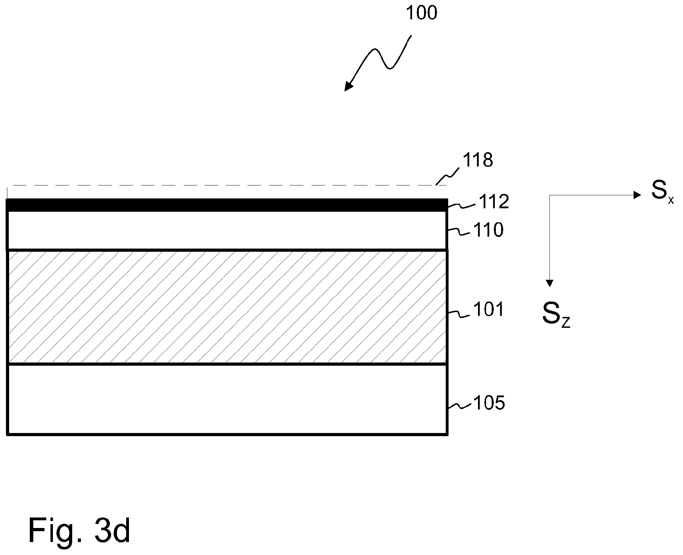

Graphical patterns may be printed on the facestock layer 100 e.g. in order to provide a visual effect and/or in order to display information. The printing may be performed to a facestock layer 100 prior to lamination of a laminate structure 1 for labels. Alternatively, a facestock 100 of a laminated structure 1 is printed. A laminate or label consisting of a facestock layer and printing layer may be referred to as a printed laminate or printed label. With reference to Fig. 3d, the printing layer 112 may be on top of the facestock 100. The laminate may also include a protective layer(s) (overlaminate layer(s)), such as lacquer, 118 on top of the printing layer 112.

For allowing processing in usual labelling devices and lines, the facestock 110 layer should have sufficient mechanical properties. For example, the facestock layer should have sufficient modulus and stiffness values in order to provide die-cuttability for the label. From the economical point of view, the smallest possible thickness of the facestock is also preferred. In order to optimize the facestock properties the facestock may have a multilayer structure. For example, asymmetric structure of the facestock layer may be preferred when optimizing facestock parameters suitable for labels. The separate plastic layers in the multilayer facestock structure, e.g. a three layer structure, may have different formulations. For example, skin layers may have a different composition when compared to the composition of the core layer. Asymmetry of the multilayer facestock layers may be achieved by using different film compositions of the layers or by varying the thickness of the layers. If the facestock layers have both a different composition and a different thickness, the structure of the multilayer facestock may be called double asymmetric.

With reference to Fig. 3d, the facestock layer 100 may have a multilayer plastic film structure including two or more plastic film layers. The multilayer facestock, also referred to a multilayer film, may comprise a core layer and at least one skin layer. Preferably, the facestock has a skin layer on both surfaces of the core layer, i.e. the facestock has a three layer structure. The facestock 100 has a core layer 101 having a first surface and a second surface, wherein the first skin layer 110 is provided on the first surface. The second skin layer 105 is on the second surface of the core layer 101. The first skin layer may also be referred to as the print receiving layer and the second skin layer as the adhesive receiving layer. In a two layer structure comprising a core layer and a first skin layer, it is also possible that the adhesive layer is applied directly to the second surface of the core layer opposite to first skin layer. There may also be additional skin layers or other layers, such as barrier and/or tie layers, in order to improve the label features, such as label functionality, mechanical properties, or the visual appearance. A tie layer may be used in order to provide enhanced adhesion between the core and skin layer(s) and prevent peeling (delamination) of the multilayer structure. Barrier layer(s) may be used in order to prevent, for example, migration of unwanted ingredients. An over-vanish or lacquer layer may be used on top of the print layer to protect the printing layer. Film surfaces may also be treated prior to printing, for example by flame treatment, corona treatment or plasma treatment in order to enhance for example adhesion. Treated surfaces may also be top coated.

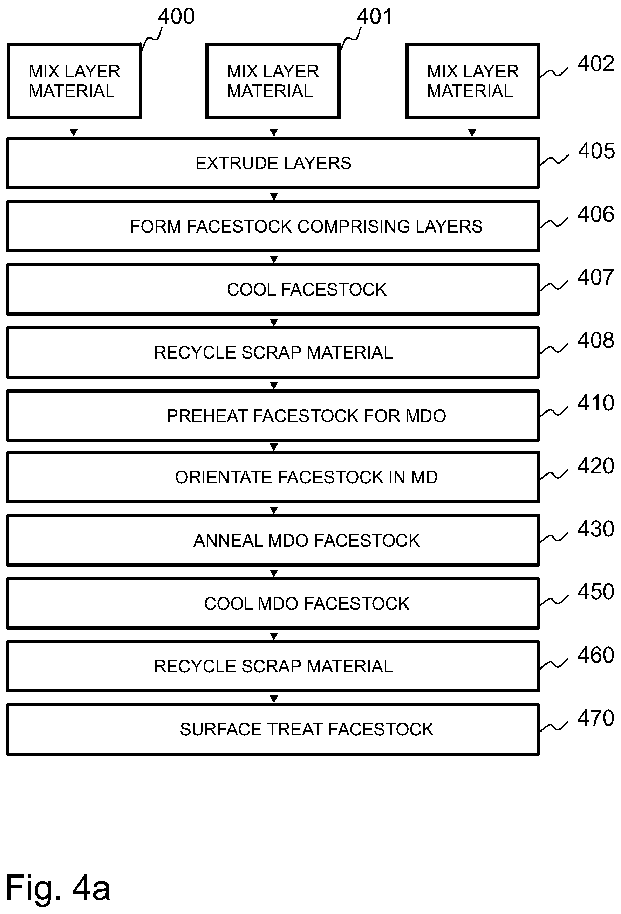

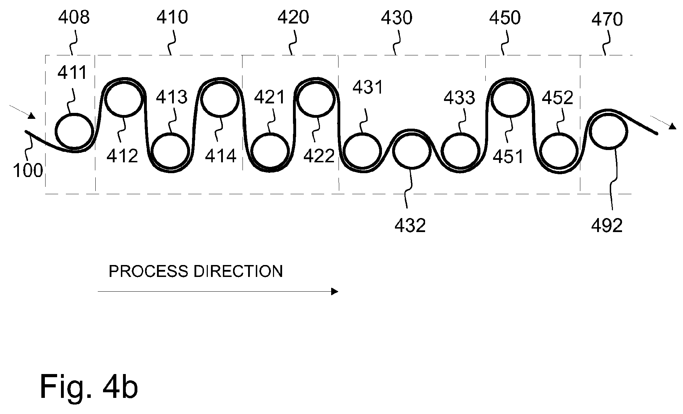

In a multilayer structure, the thicknesses of separate layers may be different. Preferably, the core layer may be relatively thick compared to skin layer(s). In other words, the thickness of the core layer may be greater than the thickness of the first skin layer and/or the second skin layer. The thickness for the three layered film (1^{st} skin%:core%:2^{nd} skin%=total100%), as shown in Fig. 4, may be 5:85:10 or 5:90:5. In other words, if an asymmetric facestock structure is preferred, the thicknesses of individual layers may be different from each other. The thickness of the second skin layer is 2 to 30% of the total thickness of the facestock. For example, the thickness of the core layer may be between 60 and 90%, or between 70 and 90%, preferably between 75 and 90% or between 80 and 90% of the total thickness of the facestock layer. The thickness of the first skin layer may be at least 2% or at least 5%, between 2 and 10% or between 5 and 10% of the total thickness of the facestock. The thickness of the second skin layer may be at least 2% or at least 5%, between 2 and 30% or between 5 and 10% of the total thickness of the facestock layer. A thin first skin layer is preferred in order to control the haze of the facestock film. The thin skin layer is advantageous if a transparent facestock should be provided. Thanks to the thick core layer, adequate mechanical properties of the facestock for labels may be achieved. For example, a MDO multilayer facestock may have a tensile modulus ratio of the machine direction to the transversal direction of the facestock between 2.0 and 3.8. Preferably, the facestock 110 of the label has a total thickness smaller than 100 microns or smaller than 80 microns, preferably smaller than 60 microns. The facestock layer may have a total thickness between 30 and 80 microns, or between 40 and 60 microns, for example 50 microns. The thickness of the first skin layer may be at least 1 µm or at least 2 µm. The thickness of the first skin layer is preferably smaller than 5 µm. The thickness of the first skin layer may be between 1 and 5 microns, preferably between 1.5 and 3 microns. The core layer may have a thickness of 30 to 50 microns, preferably 35 to 45 microns,. for example, 43 microns. The second skin layer may have a thickness of at least 1 µm or 2 µm. The thickness of the first skin layer is preferably smaller than 10 µm, or smaller than 8 µm. The second skin layer may have a thickness between 1 and 10 microns, preferably between 2 and 6 microns.

If clear facestocks are preferred, the haze of the facestock may be between 20 and 35% prior to printing and over-varnishing of the facestock. During printing and over coating, e.g. varnishing, the haze of the facestock layer is reduced. The haze of the over-vanished facestock may be lower than 10%, or lower than 8%, for example, between 2 and 6% or between 4 and 5%. Thanks to the higher haze values of the facestock the handling of the film before and during printing and subsequent over-vanishing steps may be easier. The haze is tested according to standard ASTM D1003.

Alternatively, opaque and/or white facestocks may be provided. Therefore, the facestock may comprise one or more pigments or inorganic fillers as an additive to provide the facestock with a desired colour. Additives may include, for example, titanium dioxide, calcium carbonate and blends thereof. Carbon black may be introduced to provide a black or grey facestock. Opaque facestocks may have an opacity of at least 70%, at least 75%, or at least 80%, for example between 70 and 95% or between 70 and 80%. In a multilayer facestock structure the pigment may be included in only one layer. The pigment may be included, for example, in the core layer. Alternatively, the pigment may be also in other layers.

In the multilayer structure the compositions of different layers should be at least partially compatible with each other. For example, at least some of the polymer components in the skin layers should be compatible with the polymer(s) of the core layer to provide sufficient adhesion to the core layer without additional intermediate tie layer(s). In addition, a blocking tendency of the facestock, when the facestock is rolled on itself, may be reduced by using different film compositions in the first and second skin layers of the multilayer structure. For example, an antiblocking agent may be used in a conventional manner in at least one skin layer creating some surface roughness in order to assist the unwinding of the facestock roll. In addition to this, the surface roughness of the skin layer(s) created by using the antiblocking agent may also be advantageous during stretching of the film. Thanks to the surface roughness the surface friction between the skin layer and the drawing roll may be adjusted. Also the blocking tendency of the skin layer(s) onto the drawing rolls may be avoided. The antiblocking agent may be used on at least the adhesive receiving skin layer.

Thanks to the specific multilayer structure and composition of the layers, thin and low cost films with properties suitable for the labelling applications may be manufactured. For example, MDO films having a double asymmetric structure may allow conformability of the label during the application of the label (labelling). Also, thin labels having adequate and predetermined stiffness during die-cutting and dispensing may be achieved. In addition, the films are suitable for printing, recycling and they may be used as a substrate for different types of adhesives. The multilayer structures and layer compositions are presented below.

The core layer of the facestock preferably has a plastic structure including a major amount of polymer ingredients (polymer blend). It may also comprise a minor amount of non-polymeric additives. Percentages of separate polymers in the core layer are percentages by weight based on the total polymer weight of the layer. Preferably, the core layer has a specific polymer blend composition providing sufficient stiffness for the facestock film. The core layer composition also affects the die-cutting performance of the label. In addition, it should enable the conformability of the label. The core layer comprises a polymer blend comprising propylene homopolymer (homo PP), low density polyethylene (LDPE), hydrocarbon resin (HC) and styrene block copolymer. In addition, the core layer may contain minor components.

The main polymer in a core layer is preferably a propylene homopolymer. Propylene homopolymers are polymers of propylene only, i.e. all the repeating units along a chain are of the same type. The polypropylene is preferably isotactic, wherein all of the methyl side groups are located on the same side of the polymer chain. In addition, PP may have melt flow rates (MFR) from 2 to 40, as determined by specially designed MFR apparatus. Useful propylene homopolymers may also be characterized as having densities in the range of 0.89 to 0.91 kg/m³. The propylene homopolymer is preferred in the multilayer film structure due to the specific stiffness needed for the film. For example, copolymers of propylene reduce the stiffness of the film, which is in the case of facestocks a significant drawback. The propylene homopolymer may have a stiffness of 1600 MPa.

In the core layer the content of polypropylene (PP) homopolymer is at least 40%, preferably at least 50%, more preferably at least 60% or at least 70%. Preferably the content of homo PP is not more than 95% or not more than 90%. The content of polypropylene may be between 40 and 90% or between 50 and 80%. As an example, the core layer may comprise 60%, 65%, 70%, 75% or 80% of propylene homopolymer.

Polyethylene which can be utilized in the core layer of the facestock is a low density polyethylene (LDPE). Low density polyethylene is a branched, semicrystalline thermoplastic polymer. LDPE may have a density between 0.910 and 0.933 g/cm³, preferably between 0.910 and 0.925 g/cm³. The content of LDPE is at least 1% or 2%, preferably at least 3%. The content of LDPE is not more than 20% or 10%, preferably not more than 8%. For example, the LDPE content is between 1 and 20%, preferably between 3 and 10%, or between 3 and 8%. The amount of LDPE may be 3%, 4% 5%, 6%, 7% or 8%. LDPE is used, for example, in order to stabilize the facestock during manufacturing, thus improving the processability of the facestock. It may also be beneficial when improving the adhesion between the layers in multi-layered facestock structure. However, long branches of the LDPE make the orientation more complex and the content of LDPE is preferably less than 10%.

In order to increase the stiffness of the facestock the polymer blend of the core layer contains hydrocarbon resin(s). It may also be beneficial in improving the clarity of the facestock. Hydrocarbon resins are low molecular weight compounds (polymers/oligomers) consisting of only hydrogen and carbon. Hydrocarbon resins may have amorphous structure and they may be derived from synthetic or natural monomers. For example, petroleum based resins may be used. Hydrocarbon resins may be partially or fully hydrogenated. Saturated hydrocarbons are composed entirely of single bonds and are saturated with hydrogen (fully hydrogenated). The hydrocarbon resin may be aromatic, i.e. having at least one aromatic ring. Alternatively it may be an acyclic or cyclic aliphatic resin. The number average molecular weight (Mn) of the HC may be below 2000 g/mol. For example, the Mn may be between 400 and 500 g/mol and the Mw (weight average molecular weight) between 600 and 700 g/mol, when measured via gel permeation chromatography using PS standards. The softening point according to ASTM E 28 may be below 140°C, preferably between 90 and 140 °C. In a core layer the content of hydrocarbon resin is at least 1% or 3%, preferably at least 6 or 9%. The content of HC is at most 18% or 15%, preferably at most 12% or 10%. The HC content of the core layer may be between 5 and 20%, preferably between 8 and 12%. For example, the content of HC may be 5%, 8% 9%, 10% or 12%. The hydrocarbon resin may be added during the manufacturing process of a film as a compound consisting of HC resin and a suitable carrier, such as thermoplastic olefin polymer. The carrier may be for example, propylene homopolymer.

In addition, the core layer includes styrene block copolymer(s). Styrene block copolymers include, for example, styrene-ethylene-propylene-styrene (SEPS), styrene-ethylene-butylene-styrene (SEBS), styrene-ethylene-propylene block copolymer (SEP) and styrene-ethylene-ethylene-propylene-styrene block copolymer (SEEPS). Preferably styrene-ethylene-propylene-styrene (SEPS) is used. Optionally, styrene-ethylene-butylene-styrene (SEBS) may be used. It is also possible to use mixtures of styrene block copolymers, such as mixtures of SEBS and SEPS. The content of styrene block copolymer is at least 1% or 5%, preferably at least 9%. The core layer contains at most 20% or 17%, preferably at most 15% styrene block copolymer. The content may be between 5 and 20%, preferably between 8 and 15%, for example 5%, 8%, 12% or 15%. Preferably, styrene block copolymer, such as SEPS, is used in order to decrease stiffness and to increase the flexibility of the film thus enhancing the conformability of the film. In other words, the label material flexible enough is able to conform with the surface of the item labelled, i.e. the label accommodates with the underlying contour without wrinkles. SEPS may also be advantageous for increasing the tear resistance of the film in machine direction.

In addition, the core layer may comprise minor components, such as 1% of an antioxidant for preventing gel formation due to the oxidation during extrusion process of the film. The antioxidant may also be effective in maintaining the mechanical properties of the film. Other minor components include, for example, an antiblocking agent and linear low density polyethylene. Thanks to the LLDPE the adhesion between the core layer and skin layer(s) may be improved. The amount of the antiblocking agent in the core layer may be lower than 1000 ppm, or lower than 500 ppm, preferably lower than 100 ppm, for example, 60 ppm, between 20 and 500 ppm, or between 60 and 100 ppm by weight of the total weight of the layer. The amount of LLDPE may be at most 20%, or at most 10%, for example, between 0.1 and 20% or between 0.1 and 3% by weight based on the total polymer weight of the layer. In the core layer, virgin based raw materials may be used, or the raw materials may comprise recycled raw material. For example, the recycled raw material may be from the facestock manufacturing process, as illustrated in Fig. 4a.

The first skin layer of the multilayer facestock structure should be suitable for printing and provide a sufficient printing ink anchorage. For example, flexographic printing may be used. Printing ink may include, for example, UV-curable printing inks. It should also provide good adhesion to the core layer in order to avoid peeling or delamination of the multilayer facestock structure. The first skin layer has a plastic structure including a major amount of polymer ingredients and minor amount of non-polymeric additives. Preferably, the first skin layer includes propylene homopolymer and linear low density polyethylene (LLDPE). Minor components include, for example, an antiblocking agent (AB), such as synthetic silica. The antiblocking agent may be added during film manufacturing as a compound comprising silica blended with a carrier, such as propylene homopolymer. Alternatively, PE may be used as a carrier. For example, the compound may contain 10% synthetic silica and 90% propylene homopolymer. The content of the antiblocking compound may be for example 1%, 2% or 3% based on the weight of the first skin layer. In the first skin layer, the content of the antiblocking agent is at least 0.05%, preferably at least 0.1 or 0.2%. The antiblocking agent content is at most 4%, preferably at most 1 or 0.5%. For example, the content is between 0.05 and 0.2%, between 0.2 and 0.5, or between 1 and 4%. Higher contents, e.g. 1 to 4%, are used if matte films are preferred. For achieving an antislipping and/or antiblocking effect for the film, lower contents may be used, for example between 0.05 and 0.5%, 0.05% 0.1%, 0.15, 0.3, 0.3% based on the weight of the first skin layer.

The main polymer of the first skin layer is a propylene homopolymer. The propylene is preferably the same as in the core layer, as presented above. The content of homo PP may be at least 30% or at least 40%, preferably at least 45 or 50% based on the weight of the first skin layer. The content of propylene homopolymer is at most 100%, preferably at most 80 or at most 70%. The skin layer may contain between 30 and 80% or between 40 and 80%, preferably between 50 and 70%, for example 50, 55, 60, 65 or 70% propylene homopolymer.

Another polymer component of the first skin layer is a linear low density polyethylene (LLDPE). LLDPE is a substantially linear polymer with short branches. LLDPE is produced by using a non-metallocene catalyst providing a non-elastomer polyethylene. Thanks to the linear polymer chain structure, the LLDPE is suitable for orientation (stretching). The content of LLDPE may be at least 10% or at least 20%, preferably at least 30%. The maximum LLDPE content may be 60%. The first skin layer may comprise LLDPE between 10 and 60% or between 10 and 50%, preferably between 20 and 45% or between 30 and 45%. For example, the film may comprise 30, 35, 40, 45 or 50% LLDPE. Thanks to the LLDPE, the first skin layer is more suitable for subsequent surface treatment of the film by e.g. corona, plasma or flame treatment.
In a label laminate structure, the second skin layer of the multilayer facestock is the adhesive receiving layer. Thus, the composition of the layer should provide a surface for an adhesive layer to be joined, said surface being capable of providing good anchorage of an adhesive. It should also provide good adhesion to the core layer in order to avoid peeling or delamination of the multilayer facestock structure. The second skin layer may include all the same polymeric ingredients as the core layer presented above. The second skin layer may include propylene homopolymer, low density polyethylene, hydrocarbon resin and styrene block copolymer. In addition, it may comprise an antiblocking agent, such as silica. The content of the antiblocking agent may be e.g. 0.2%. The composition of the second skin is important in view of processability of the facestock. LDPE may also be used as an additive in the second skin layer, providing better adhesion to the core layer. The second skin layer composition may further include linear low density polyethylene.

The second skin layer may have a composition comprising propylene homopolymer, linear low density polyethylene, low density polyethylene, hydrocarbon resin and styrene block copolymer. It may further comprise a minor content of antiblocking agent.

The content of propylene homopolymer may be at least 20% or 30%, preferably at least 40% based on the weight of the second skin layer. The propylene homopolymer content is at most 80%, preferably at most 60%. For example, between 20 and 80% or between 20 and 60%, preferably between 40 and 50%.

The content of linear low density polyethylene (LLDPE) may be at most 40% or at most 30%, preferably at most 25%, for example, between 10 and 30%, preferably between 15 and 25%. The content of low density polyethylene (LDPE) is at least 1% or 2%, preferably at least 3%. The content of LDPE is not higher than 20% or 10%, preferably not higher than 8%. For example, the LDPE content is between 1 and 20%, preferably between 3 and 10%, or between 3 and 8%. The content of LDPE may be 3%, 4% 5%, 6%, 7% or 8%.

In a second skin layer the content of hydrocarbon resin is at least 1% or 3%, preferably at least 6 or 9%. The content of HC is at most 18% or 15%, preferably at most 12% or 10%. The HC content of the core layer may be between 5 and 20%, preferably between 8 and 12%. For example, the content of HC may be 5%, 8% 9%, 10% or 12%. The hydrocarbon resin may be added during the manufacturing process of a film as a compound consisting of HC resin and a suitable carrier, such as thermoplastic olefin polymer. The carrier may be for example, propylene homopolymer.

In addition, the second skin layer includes styrene block copolymer(s). Preferably the styrene block copolymer is same as used in the core layer presented above For example, styrene-ethylene-propylene-styrene (SEPS), styrene-ethylene-butylene-styrene (SEBS), styrene-ethylene-propylene block copolymer (SEP) and styrene-ethylene-ethylene-propylene-styrene block copolymer (SEEPS). Preferably styrene-ethylene-propylene-styrene (SEPS) is used. Optionally, styrene-ethylene-butylene-styrene (SEBS) may be used. It is also possible to use mixtures of styrene block copolymers, such as mixtures of SEBS and SEPS. The content of styrene block copolymer is at least 1% or 5%, preferably at least 9%. The core layer contains at most 20% or 17%, preferably at most 15% styrene block copolymer. The content may be between 5 and 20%, preferably between 8 and 15%, for example 5%, 8%, 12% or 15%.

The antiblocking agent is preferably the same as used in the first skin layer and presented above. The content of the antiblocking agent is at least 0.05%, preferably at least 0.1 or 0.2%. The AB content is at most 4%, preferably at most 0.5%. For example, the content is between 0.05 and 0.2%, between 0.2 and 0.5, or between 1 and 4%.

In addition, all polymeric layers in the multilayer structure may further comprise minor components, such as inorganic fillers, pigments, other organic or inorganic additives in order to provide desired properties, such as appearance (opaque or coloured films), durability and processing characteristics. Examples of useful minor components include calcium carbonate, titanium dioxide, antioxidant compounds, optical brighteners, antistatic aids and processing aids.

In an asymmetric multilayer facestock structure the thickness of the first skin layer may be different from the thickness of the second skin layer. For example, the thickness of the first skin layer is between 10 and 90% of the thickness of the second skin layer. Preferably, the thickness of the first skin layer is between 20 and 50% of the thickness of the second skin layer. It is also possible that the composition of the first skin layer is different form the composition of the second skin layer. The content of linear low density polyethylene in the second skin layer may be between 0 and 50 % or between 20 and 40% of the content of linear low density polyethylene in the first skin layer. Further, the content of propylene homopolymer in the second skin layer may be at least 50% or at least 75% of the content of PP homopolymer in the first skin layer, preferably at least 80% or at least 90%. The content of PP in the second skin layer may be between 75 and 120% or between 80 and 115% of the content of PP in the first skin layer. Further, the second skin may further comprise other components, such as at least one of the following low density polyethylene, hydrocarbon resin or styrene block copolymer, which are not included in the first skin layer composition.

Different aspects in a product lifecycle may require different qualities and properties for the facestocks and labels. When used, a label comprising a facestock may need to be durable and may need to have a good conformability and clarity. The printability to the label surface may need to be good. In labelling, the stiffness of the facestock in the machine direction may facilitate the labelling, where a label comprising a facestock may need to be detached from a liner. The manufacturing of a facestock may require a chemical composition together with the structure of the facestock to be optimized, as the label may need to be die cut, while the manufacturing method may need to be cost effective and environmentally friendly. To obtain these quite different objectives, the manufacturing method operating parameters may be selected according to the chemical composition and the structure of the layers to produce the facestock. The manufacturing method for the facestock may therefore comprise a combination of operating parameters which, when selected in accordance to the chemical composition and the structure of the layers, may produce a facestock as described above.

Tensile modulus may be used to describe the stiffness of the material. In polymers and products comprising polymers, such as label facestocks, the tensile modulus may be directional, where the tensile modulus in a first direction may differ from the tensile modulus in a second direction. The tensile modulus may be referred to as the ratio of stress to elastic strain in tension. A high tensile modulus may mean that the material is rigid, in other words more stress may be required to produce a given amount of strain. For example, the MD tensile modulus may be 1.7 GPa for multilayer facestock having an orientation ratio of 5:1, 2.2 GPa for facestock having an orientation ratio of 6:1, and 2.7 GPa for facestock having an orientation ratio of 7:1. The TD tensile modulus may be 0.8 GPa. Hence, the tensile modulus ratio MD/TD of machine direction oriented multilayer facestock may be between 2.1 to 3.4 based on ISO527 standard for plastic films.

From the optical point of view, high transparency of the labels may be preferred. Transparent (clear) labels are substantially transparent to visible light. Transparent no-label look appearance of the label is advantageous, for example, in applications where the objects beneath the label, i.e. the surface of a bottle, should be visible through the label. The haze level of a facestock layer should be lower than 35%, preferably equal to or lower than 25% or lower than 10%, when tested according to the standard ASTM D1003.

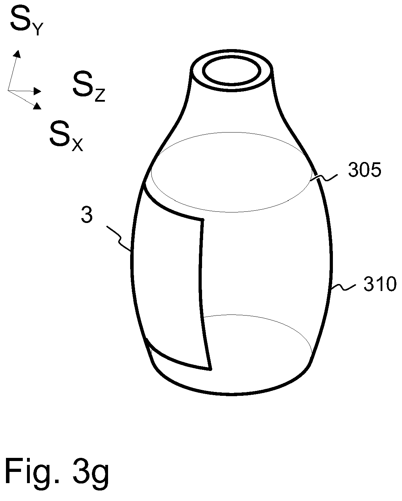

Preferably, the labels are also conformable. In other words, the label can conform smoothly and without wrinkles to the contour of the article even when this is curved in two-dimensions. Referring to Fig. 3g a conformable label 3 attached to the surface of an article 310, such as bottle, is presented.

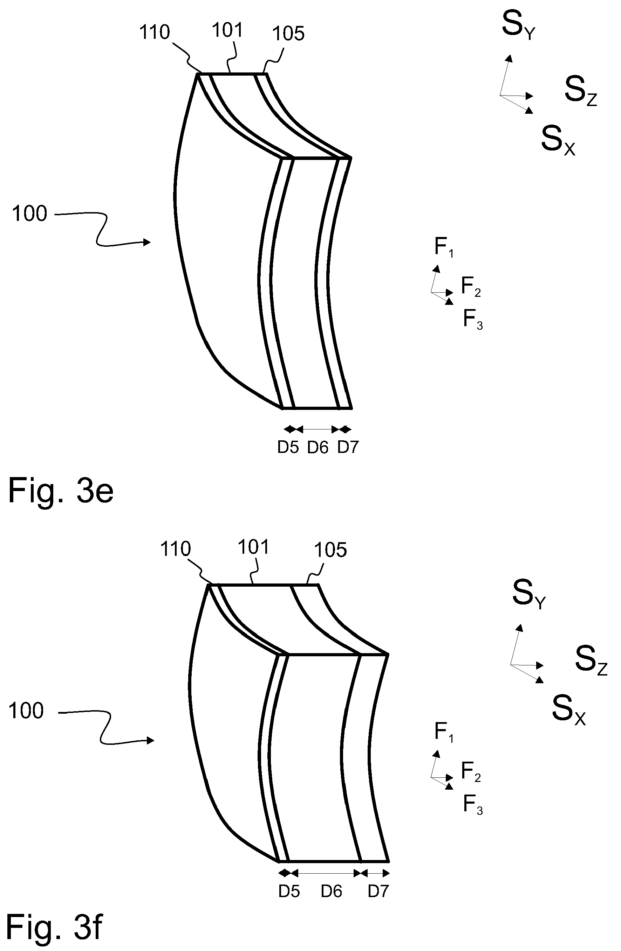

To obtain a conformable label, also conformable facestock for the label should be provided. Figures 3e and 3f present conformability of a multilayer facestock structure. In the conformable facestock, which is rigid in the machine direction Sₓ, the facestock layers preferably comprise different chemical compositions. Further, by selecting the layer thickness D5, D6 and D7 in each layer according to the used chemical composition, an improved tensile modulus may be obtained. For example, an asymmetric facestock structure presented in Fig. 3f may be preferred. The tensile modulus may be improved further by selecting the operating parameter in the processing method when manufacturing the machine direction oriented facestock.

It may also be preferred to have a facestock structure and a composition which can minimize or eliminate migration of the components from the adhesive layer into the print layer. The multilayer facestock structure having a specific layer composition, as presented above, may be beneficial in providing a barrier for the migration of adhesive components. Preferably the facestock comprises a propylene homopolymer in at least one of the following layers: the core, the first skin layer or the second skin layer. Preferably at least the core or the second skin layer comprises propylene homopolymer. Preferably the content of propylene homopolymer is higher than the content of polyethylene. For example, the ratio of propylene homopolymer to polyethylene in the core layer is at least 2:1, preferably at least 5:1 or at least 10:1. In the second skin layer the ratio of propylene homopolymer to polyethylene may be, for example, at least 2:1 or 3:1. The propylene homopolymer may also be advantageous in avoiding distortion of the film. Thus, the multilayer facestock may be suitable for using with different adhesives. Suitable adhesives include, for example, pressure-sensitive adhesives (PSA), activatable adhesives, hot melt adhesives. Pressure-sensitive adhesives, such as acrylic based adhesives and a natural or synthetic rubber containing elastomers are preferred. During producing a label laminate the adhesive layer may be directly applied onto the facestock on the surface of the second skin layer opposite the core layer, or the adhesive may be applied onto the second surface of the core layer. Alternatively, the adhesive may be applied onto the release liner and subsequently transferred to the facestock when the liner and facestock are combined. When the release liner is removed to expose the adhesive, the adhesive remains joined to the facestock and provides an adhesive surface capable of adhering the facestock to the surface of an article during labelling. If the adhesive is activatable, there may be no need for the release liner. The adhesive may be activated by heat or by another energy source, for example UV.

The multilayer facestocks can be made by co-extrusion, coating, or any other laminating process. In co-extrusion the layers of the multilayer structure are formed simultaneously by using a suitable co-extrusion die. The layers are adhered to each other to provide a unitary co-extrudate. The multilayer films may be co-extruded through blown film extrusion technology. Alternatively, the films may be cast, i.e. produced by cast extrusion technology.

In order to provide effective manufacturing of a multilayer facestock, the melt flow index values of the separate layer compositions are adjusted. The melt flow index values of the separate layers are also important in providing a multilayer structure in which the separate layers are well adhered together.

The extruded multilayer facestock is subsequently machine direction oriented under uniaxial stress in order to provide orientation of the polymer chains in the direction of pull. The machine direction (MD) refers to the running direction of the facestock during the manufacturing. The uniaxial stretching of the film in machine direction is so called machine direction orienting (MDO). The stretching allows, for example, the reduction in total facestock film thickness without losing the mechanical properties required for a facestock of a label. During MDO the film is heated to an orientation temperature. Preferably, the orientation temperature is above the glass transition temperature Tg of the polymer and below the melting temperature of the polymer Tₘ. The orientation temperature may be e.g. between 110 and 140 °C. The heating is preferably performed utilizing multiple heating rollers. Heated film is fed into a drawing section, which includes draw rolls with different rolling speeds. The rolling speed is adjusted so that the predetermined draw ratio of the film is achieved. The stretched film enters the annealing section, which allows stress relaxation of the oriented film by keeping the film at an elevated temperature for a period of time. Finally, the film is cooled through a cooling section to ambient temperature. The ratio of total film thickness before and after stretching is called the "draw ratio". The draw ratio of the MDO facestock film may be between 4:1 and 10:1, preferably the draw ratio is between 5:1 and 8:1, for example 7:1.

Fig. 4a shows an example of a process to manufacture a machine direction oriented (MDO) facestock. The layer materials may be mixed in separate mixers, as shown in steps 400, 401 and 402. There may be one or more mixer for each layer material. After the mixing, the material may be conveyed and melted in an extruder, as shown in step 405. The facestock may be formed by extrusion or coextrusion comprising more than one layer. If the layers are extruded separately, they may be attached to each other later, for example by lamination. Coextrusion may be the preferred method. The facestock may be cooled as shown in step 407. Before or after cooling facestock material which may not be suitable for orientation may be recycled back to the manufacturing process, as shown in step 408. Suitable facestock material for orientation may comprise a core layer with a first and a second surface, a first skin layer attached to the first surface of the core layer, and a second skin layer attached to the second surface of the core layer. The chemical composition of the first skin layer may be different from the chemical composition of the second skin layer. The thickness of the first skin layer may be different from the thickness of the second skin layer. For example, the facestock may comprise propylene homopolymer at least 40 percent of the total polymer weight of the core layer. Further, the content of propylene homopolymer may be at least 40 percent of the total polymer weight of the second skin layer, and the content of propylene homopolymer may be at least 30 percent of the total polymer weight of the first skin layer. The content of linear low density polyethylene in the first skin layer may be at least 30 percent of the total polymer weight of the layer, and the content of linear low density polyethylene in the second skin layer may be at least 10 percent of the total polymer weight of the layer.

The second skin layer may have a greater thickness than the first skin layer, and the core layer may have a greater thickness than the second skin layer. Advantageously the chemical composition of the layers may be selected such that the stiffness of the core layer may be increased in the machine direction orientation, for example, by increasing the proportion of propylene homopolymer in the core layer.

In step 410, the facestock may first be heated to improve the uniformity of the temperature of the facestock. The uniformity of the temperature of the facestock may level out the effect of the orientation in machine direction. An even temperature throughout the facestock may further enable a better control of the orientation step to obtain a more equal level of orientation throughout the facestock. In step 420, the facestock is drawn in the machine direction by a longitudinal force, which causes the facestock material to stretch and the polymer fibers to orientate in the machine direction. The stretching may have an effect on the thickness of the facestock. When stretching the facestock, the thickness of the facestock may diminish in the same ratio as the facestock stretches or elongates. For example, a facestock may have a thickness of 350 micrometers before machine direction orientation (MDO), and is stretched by a draw ratio of 7:1. After the machine direction orientation the facestock may therefore have a seven fold diminished thickness of 50 micrometers.

The stretching may take place in a stretching unit. The stretching unit may comprise one or more rolls. Advantageously the stretching may be performed by draw rolls, such as a first roll and a second roll. The draw rolls may comprise nip rolls for increasing the surface friction of the facestock to the draw rolls. The rolls may have a rotational speed. The rotational speed of one roll may be different from the rotational speed of another roll. The rotation speed of a roll may be changed or it may be selected according to the required machine direction orientation level or draw ratio. The stretching unit may comprise a first roll and a second roll, which are separated by a gap between the first roll and the second roll. The rolls may rotate in the same direction. The facestock may be arranged to pass through the gap between the first roll and the second roll. The distance of the gap may be between 1 - 10 mm, preferably smaller than 5 mm, for example smaller than 3 mm. The gap may be the site where the stretching of the facestock may be performed between the first roll and the second roll. The first roll may face the first skin layer of the facestock, and the second roll may face the second skin layer of the facestock. The first roll may have a first rotation speed and the second roll may have a second rotation speed. Further, the speed of the surface of the first roll may be different from the speed of the surface of the second roll. The speed of the surface of the second roll may be higher than the speed of the surface of the first roll, which may be used to stretch the facestock. The speed of the surface of the second roll may be, for example, between 5 and 8 times higher than the speed of the surface of the first roll. The first roll may have a first stretching temperature and the second roll may have a second stretching temperature. The first stretching temperature of the first roll may be lower than the second stretching temperature of the second roll. The difference between the first stretching temperature and the second stretching temperature may be used to select the longitudinal force. The first roll may be arranged to face the first skin layer of the facestock and the second roll may be arranged to face the second skin layer of the facestock. In this case, the first stretching temperature at the first roll may be arranged to be lower than the second stretching temperature at the second roll. Furthermore, the use of a temperature gradient when applying a longitudinal force may prevent slipping or breaking of the film. As the temperature is lowered on a roll, the skin surface in contact with the roll also undergoes a decrease in temperature, which may have an effect on the rheology of the surface. Therefore, the surface friction on the skin layer surface may increase, which may act as a counterforce to the longitudinal force. As a consequence, there may be a first surface friction between the first skin layer and the first roll, which may depend on the first stretching temperature of the first roll, the chemical composition and thickness of the first skin layer, and the speed of the surface of the first roll. There may also be a second surface friction between the second skin layer and the second roll, which may depend on the second stretching temperature of the second roll, the chemical composition and thickness of the second skin layer, and the speed of the surface of the second roll. The speed of the surface of the second roll may have an effect on the longitudinal force; by increasing the speed of the surface of the second roll the longitudinal force may be increased. However, to prevent slipping of the facestock at the first roll in contact with the first skin surface, the first roll temperature may be decreased to increase the surface friction, which may then counteract the thus increased longitudinal force. In other words, the first surface friction and the second surface friction may be balanced by selecting a temperature for the first roll with respect to the chemical composition of the first skin layer and selecting a temperature for the second roll with respect to the chemical composition of the second skin layer. The difference between the temperature of the first roll and the temperature of the second roll may be, for example, between 0°C and 30°C, such as smaller than 15°C. The first roll and the second roll may have the same temperature. The effect may further be controlled by selecting the layer thickness of the first skin layer and the second skin layer such that the applied longitudinal force is evenly balanced and the orientation may proceed in a smooth and controlled manner. By selecting the operational parameters, such as the layer composition, the layer thickness, the temperature of a roll and the speed of the surface of a roll, a machine direction oriented facestock may be obtained which may have a draw ratio in a machine direction between 4:1 and 8:1, such as greater than or equal to 5:1 and between 5:1 and 8:1, or between 5:1 and 7:1. The method may enable the formation of a machine direction oriented facestock with a first tensile modulus in the machine direction and a second tensile modulus in transversal direction, wherein the tensile modulus ratio of machine direction to transversal direction may be improved. The tensile modulus ratio of machine direction to transversal direction in the facestock may be between 2.0 and 3.8. Tensile modulus is measured according to the standard ISO 527.

After the orientation, the facestock may be annealed as shown in step 430. The annealing may be used to relax the machine direction oriented facestock and stabilize the effect of the stretching.

After the annealing, the facestock may be cooled down as shown in step 450. After the machine direction orientation, in step 460, the thickness of the facestock may not be uniform throughout the facestock width, and edges of the facestock may be thicker than the rest of the facestock. The edges which do not comprise the required thickness may be cut off the facestock after the stretching and may be recycled back to the manufacturing process. The edges may be, for example, used as recycled raw material for the core layer 101. The material for recycling may be removed before or after the cooling 450, preferably after the annealing 430 and before the cooling 450.

After the orientation the skin layer(s) of the facestock, i.e. adhesive and/or print receiving layer(s), may be surface treated by flame treatment, corona treatment, plasma treatment in order to enhance, for example, adhesion of the print layer. With reference to Fig. 4a, after the orientation 430, the facestock may be surface treated as shown in step 470.

Due to the polymer composition of the skin layer surface, the surface may be apolar and may have a low surface tension. Surface tension in this context is expressed as the amount of a force required for a length of the material with a unit of millinewtons per meter (mN/m), which may also be in units of dynes per centimetre (dynes/cm). Low surface tension may lead to poor retaining capability of printing ink or other coating material, which may be applied to the skin layer surface.

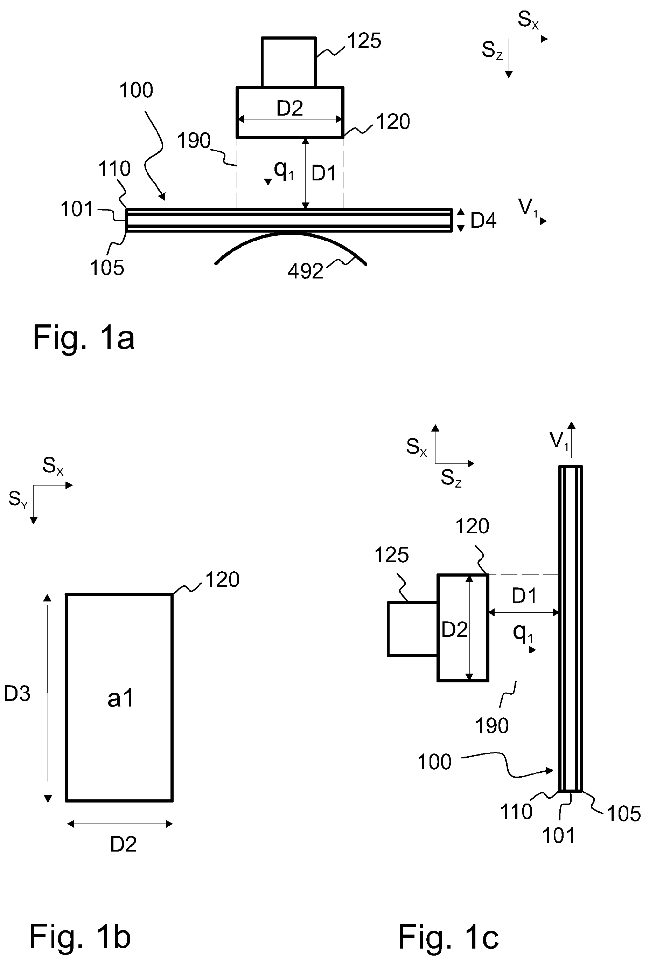

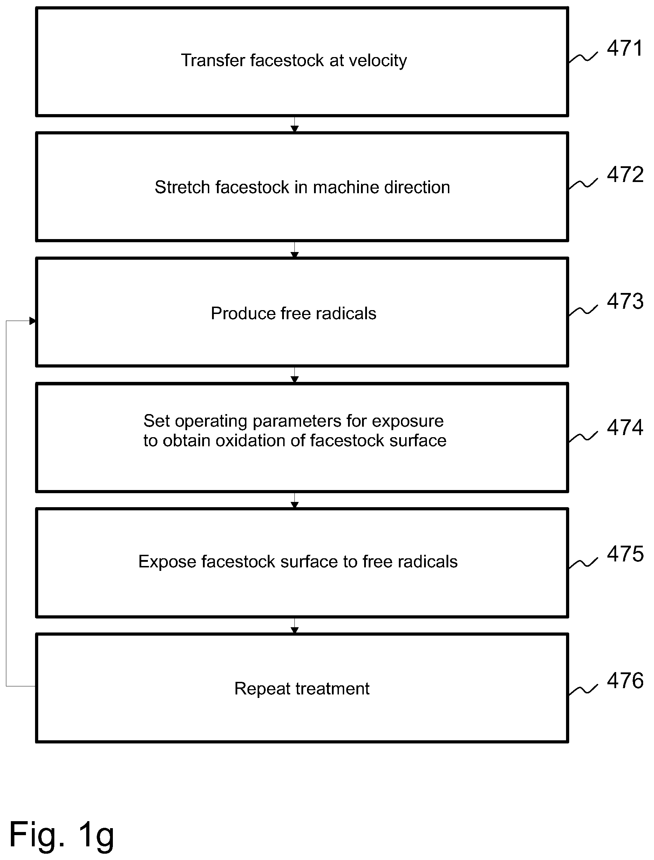

Figs. 1a-1f show examples of a method for skin layer surface treatment, which may be used to increase the surface tension of the skin layer surface. The surface treatment may improve the printability of the skin layer surface. The surface treatment of the facestock may comprise steps such as shown in Fig. 1g. The method may comprise other steps in addition to the steps shown in the Fig. 1g.

Referring to Figs. 1a-1g, in step 471, the facestock may be transferred at a velocity V1 with respect to an apparatus comprising a primer unit 125 located at a distance D1 from the first surface of the skin layer 110. The velocity V1 may be selected such that the period of time for which an area a1 of the first surface of the skin layer 110 may be exposed to an effect caused by a zone 190 may be sufficient to have a desired effect on the first surface of the skin layer 110. The desired effect may depend on the chemical composition or thickness of the facestock layers.

In step 472, the facestock may be stretched uniaxially in the machine direction. In the stretching some of the polymer molecules in the facestock may be in crystal form while other polymer molecules may be in amorphous form. The stretching may extend the polymer chains in the facestock in the machine direction. The extent of stretching, in other words the degree of a longitudinal force in the machine direction, may therefore have an effect on the ratio of the polymer crystals to the amorphous polymer molecules in the facestock. The amorphous form of the oriented polymer molecules may be more extended and may present a larger area exposed to free radicals compared to the polymers in crystal form. After stretching in machine direction and annealing, the crystallization of the polymer molecules may still continue for a while. To improve the effect it may be preferred that the surface treatment is applied to the skin layer surface while the number of amorphous polymer molecules is at the greatest. Therefore, exposing the first surface of the skin layer to the free radicals may be done after the stretching of the facestock at a longitudinal force to produce the machine direction oriented facestock, but before winding the machine direction oriented facestock to a roller for storage. The stretching may have an effect in the thickness of the facestock. When stretching the facestock, the thickness of the facestock may diminish in the same ratio as the facestock stretches or elongates. For example, the facestock may have a thickness of 350 micrometers before the machine direction orientation (MDO), and it is stretched by a draw ratio of 7:1. After the machine direction orientation the facestock may therefore have a seven fold diminished thickness of 50 micrometers. After the machine direction orientation the thickness of the facestock may not be uniform throughout the facestock width, and edges of the facestock may be thicker than the rest of the facestock. The edges which do not comprise the required thickness may be cut off the facestock after the stretching and may be recycled back to the manufacturing process. The edges may be, for example, used as recycled raw material for the core layer. The treatment may be done for the skin layer surface after stretching the facestock. The treatment may comprise an exposure of the skin layer surface to free radicals. The free radicals may be produced by a flame. In step 473, when using the flame to treat the facestock surface, the free radicals may be produced by a fuel gas. Treatment by flame may be advantageous if the skin layer comprises at least 40 percent of propylene homopolymer of the total weight of polymers in the layer. The free radicals may alternatively be produced by corona or plasma discharge. Plasma is a partially ionized gas comprising both physically and chemically reactive species. Plasma treatment includes, for example thermal plasma, but also cold plasma. In thermal plasma all species have approximately same temperature. Cold plasma has a high electron temperature but a low ion or gas temperature. It is also possible to use low pressure or atmospheric pressure during the plasma treatment. Atmospheric pressure may be preferred in in-line surface treatment processes. For surface activation, for example, O₂ plasma or N₂ plasma may be used. When using corona or plasma discharge, the apparatus may comprise, for example, a high-frequency power generator, a high-voltage transformer, a stationary electrode, and a treater. Electrical power may be converted into higher frequency electrical power, which may be applied to electrode tips comprising an air gap between the tips. A high voltage difference produced by the high frequency electrical power between the electrode tips may then generate a discharge of plasma. In the discharge of plasma, gas molecules in the air may be converted into free radicals, such as ozone (O₃), which may act as reactive components in chemical reactions on the facestock surface. The free radicals may participate in breaking the carbon-hydrogen links along the polymer surface. In flame treatment, the fuel gas may be a hydrocarbon, for example a C₁ - C₄ hydrocarbon. The hydrocarbon may be, for example, methane, propane or butane. The hydrocarbon may also be natural gas. The fuel gas may be mixed with an oxidant and ignited with heat to produce a propagating flame where a combustion reaction may occur. The oxidant may be air. The oxidant may also be oxygen (O₂) or a mixture of gaseous components comprising oxygen. The flame may comprise an oxidizing zone with a high temperature, where the combustion reaction between the fuel gas and the oxidant may form free radicals. The temperature of the oxidizing zone may depend of the used fuel gas and the mixture ratio of oxidant and the fuel gas. The temperature of the oxidizing zone may depend on the selected fuel gas and the mixture comprising the fuel gas and the oxidant, which may be set in the step 474. The mixing ratio of the mixture is the amount of the oxidant mixed with the fuel gas, which may have an effect on the level of the combustion reaction. The mixing ratio may be expressed as the molar fraction of fuel gas to the molar fraction of oxidant. A mixture comprising fuel gas and air in at least equimolar amounts may lead to a complete combustion reaction at a higher temperature, whereas a smaller molar fraction oxidant may yield an incomplete reaction at a lower temperature. The temperature of the oxidizing zone in the method may be, for example between 600°C and 2000°C, preferably at least 700°C, more preferably at least 800°C. In the oxidizing zone, the concentration of the fuel gas diminishes rapidly as the combustion reaction and heat release take place. Advantageously the treatment mixture ratio of oxidant and the fuel gas may be selected such that a dwell time during which the skin layer surface may be exposed to the free radicals is optimized to obtain a desired effect on the surface tension. The facestock may be exposed to the free radicals as shown in step 475. At the same time the dwell time may be selected such that the thermal stress of the flame to the skin layer surface is kept at a minimum. The dwell time may be dependent on the velocity V₁ of the skin surface. The velocity V₁ in this context may be defined with respect to the flame, corona or plasma discharge. The dwell time may also depend on the mixture flow q₁, which is the propagation speed of the flame. The propagation speed of the flame correlates with the temperature of the flame, which may define the thickness of the oxidizing zone where free radicals may be formed. The mixture flow may be expressed in normal cubic meters per hour (Nmc/h) of fuel gas burned per burner meter. The distance D1 between the oxidizing zone and the first surface of the skin layer may be thus be selected in respect to the dwell time such that the treatment level produces a desired surface tension level. The distance D1 may advantageously be selected such that the skin layer surface may pass through the oxidizing zone of the flame, which may be the part of the flame with the highest temperature. The temperature in the oxidizing zone may be at least 700°C, preferably at least 800°C. The distance D1 may be smaller than 10 mm, preferably smaller than or equal to 5 mm.

The flame may comprise a colour depending on the used mixture ratio. The colour, such as violet, green or yellow, may be due to compounds such as excited CH radicals or C₂ molecules. The colour of the flame may be used to observe the mixture composition during the flame treatment to optimize the flame conditions. The length of the oxidizing zone may depend on the propagation speed of the flame, which may be called the mixture flow q1. The oxidation of the hydrocarbon by an oxidant in the flame may, in addition to free radicals, also produce oxygen based groups which may be inserted in the broken carbon-hydrogen links along the polymer chains at the skin layer surface. These oxygen based groups may comprise, for example, oxygen-based OH radicals or a HO₂ radical. In particular, these reactive groups may increase the surface tension level of the skin layer surface and may participate in prolonging the effect of the surface treatment.

The treatment increasing the surface tension may not be permanent, and the level of surface tension may decrease from the obtained treatment level as a function of time. The treatment may later be repeated, as shown in step 476, to restore the level of surface tension obtained in a previous treatment. This step 476 is optional. Depending of the skin surface polymer composition, the restoration may not be complete. However, it has been discovered that in flame treating, by selecting operating parameters used in the method, such as the mixing ratio, the mixture flow q₁, the distance D1 and the velocity V₁ of the facestock, according to the skin structure and composition, the surface tension of the skin layer may be maintained higher than or equal to 38 mN/m or 44 mN/m after 50 days, or after 120 days from the treatment. Surface tension is measured according to the standard ISO 8296.

An apparatus may be arranged to provide a machine direction oriented facestock and to perform the surface treatment for the facestock. The surface treatment may be a part of the manufacturing process, i.e. the in-line manufacturing process of the facestock may also include surface treatment of the facestock. The surface treatment may alternatively be arranged separately (off-line) and may not be part of the process. With reference to Fig. 4b, the apparatus may comprise a stretching unit 420, a facestock transfer unit 408 and a surface treatment unit (burner unit) 470. The facestock 100 may be transferred by a transfer unit 408 to a pre-heating unit 410, which may be adjoined by a stretching unit 420. The stretching unit may be adjoined to an annealing unit 430, which may be adjoined to a cooling unit 450. The burner unit 470 may be adjoined to the cooling unit. Alternatively, the stretching unit 420, the annealing unit 430 or the cooling unit 450 may comprise the burner unit 470. The pre-heating unit 410, the stretching unit 420, the annealing unit 430, the cooling unit 450 and the burner unit 470 may also be part of the transfer unit 408. Each unit may comprise rolls. There may be more than one roll in each unit and the number of rolls in each unit may vary. The rolls may have a rotational speed. The rotational speed of a roll may be changed or it may be selected according to the required purpose. The rolls may have a temperature. The temperature of a roll may be changed or it may be selected according to the required purpose. The rolls may be used to transfer the facestock. The rolls may generate a velocity V1 at which the facestock may be transferred. The velocity V1 of the facestock may be different in each unit. For example, the preheating unit 420, stretching unit 420, annealing unit 430, cooling unit 450, burning unit 470 or the transfer unit may comprise rolls rotating at different speeds. The velocity V1 of the facestock may therefore be given as the average velocity between two rotating rolls. The rolls may also be used to heat or cool the facestock. The rolls may be used to stretch the facestock in the machine direction by a longitudinal force. The rolls may have a width and a cross-sectional diameter. The width and a cross-sectional diameter of a roll may vary from those of another roll.

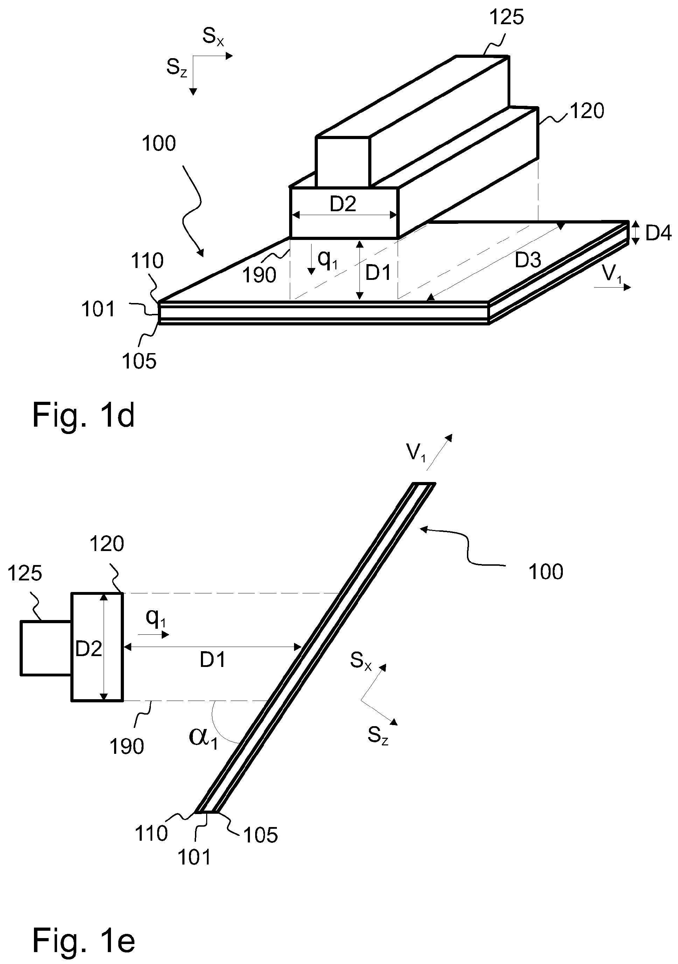

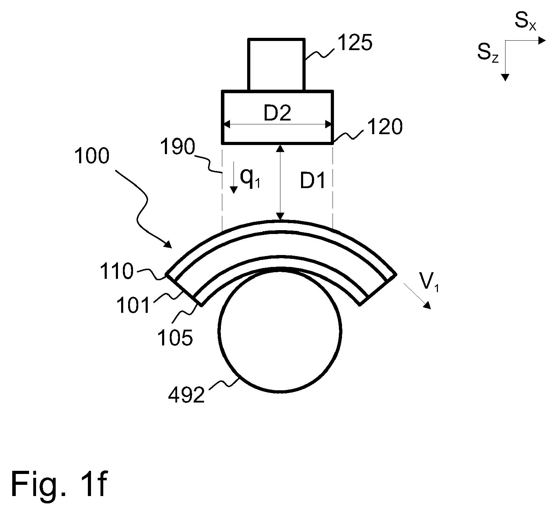

An example of the surface treatment unit (burner unit) is presented in Fig. 1 a. The burner unit may comprise a primer device 125 and a mixer device 120. The mixer device may be, for example, a burner port. The primer device 125 may comprise the mixer device 120. The mixer device 120 may be optional. The primer device 125 may be used to provide fuel gas. The mixer device 120 may be used for forming a mixture comprising the fuel gas and an oxidant. The mixer device 120 may be used for selecting the mixing ratio of the mixture comprising the fuel gas and the oxidant such that the combustion reaction may produce an oxidizing zone where free radicals may be formed. The surface of the first skin layer 110 of the facestock 100 may be facing the primer device. However, the surface treatment may optionally be performed on the surface of the second skin layer 105, and the facestock may be formed such that the surface of the second skin layer 105 is facing the primer device 125. The facestock may have a thickness D4. The facestock thickness D4 may vary during the manufacturing of the machine direction oriented facestock. The facestock thickness D4 during the flame treatment may be smaller than 60 micrometers, for example 50 micrometers.

Fig. 1b presents an example of an area a1 defined by the first width D2 and the second width D2 of the mixer device 120. The area a1 may be planar, or it may have curvature. An example where the area a1 may have a curvature is presented in Fig. 1f, where the area a1 may be located on the skin layer 110 surface above a roll 492, which may be a treater roll. The effect the surface treatment may have on the skin layer 110 surface of the facestock 100 may depend on the velocity V1, the mixture flow q1, the distance D1 between the skin layer 110 surface and the mixer device 120, the temperature of the oxidizing zone and the temperature at the skin layer 110 surface. The roll 492 may be used for cooling the facestock 100 during the skin layer 110 surface treatment. The roll may have a temperature between 5°C and 30°C, advantageously at least 10°C. The exposure of the skin layer to the free radicals may be determined by the dwell time, which is determined by the velocity V1 of the skin surface. The velocity V1, the temperature at the skin surface and the mixture flow may be directly correlated to each other. A higher skin surface velocity V1 may require a higher temperature at the skin surface and a higher mixture flow rate q1. The dwell time may also be selected by setting the oxidizing zone where the flame temperature is to be the highest at the distance D1 from the mixer device 120. The distance D1 may therefore be used to control the flame intensity. The apparatus to perform the surface treatment comprising the primer unit 125 may be located on the same side of the core layer 101 as the skin layer 110. An example of the apparatus, which is located in vertical position, is presented in Fig. 1c. A three dimensional example of the apparatus is presented in Fig.1d, where the width of the facestock 100 is equal to the width D3 of the primer device.

Fig. 1e presents an example where the apparatus may be located at an angle α₁ from the first surface of the facestock. Here, the facestock 100 may have a velocity V₁ with respect to the primer unit 125 which may produce the corona, flame or plasma discharge. The velocity V₁ may be parallel to a first direction Sₓ. The facestock 100 may pass through the area a1 specified by the first width D2 and the second width D3 of the mixer device 120. The distance D1 from the mixer device 120 to the surface of the first skin layer 110 may be determined by the angle α₁ from the centre of the first width D2 of the mixer device with respect to the first direction Sₓ.

The manufacturing of a facestock for the labels is to be illustrated in the following example.

### Example 1.

According to an example, the flame treatment may comprise parameters, as presented in Table 1 below, for a skin layer surface comprising at least 30 percent of propylene homopolymer of the total polymer weight of the layer. It may be noted that the surface treatment of a facestock surface may depend of the composition of the skin layer. For example, polyethylene may be easier to treat, and the increased surface tension level may last longer. The renewal of the surface treatment may also be more efficient. In particular, a skin layer comprising at least 30 percent of propylene homopolymer of the total polymer weight of the layer may be difficult to treat. Addition of a linear low density polyethylene or low density polyethylene to the skin layer composition may help to increase the surface tension or the treatment. Flame treatment, however, may be advantageous for a skin layer comprising propylene homopolymer between 30 and 60 percent of propylene homopolymer of the total polymer weight of the layer. Such a skin layer may endure the flame treatment better due to better physical properties of the polymer, such as a higher melting point. Further, the treatment may be improved by using a facestock, where the core layer comprises at least 50 percent of propylene homopolymer of the total polymer weight of the layer, and the skin layers comprise at least 40 percent of propylene homopolymer of the total polymer weight of the layers. It has also been discovered that by using first a flame to increase the surface tension level of the facestock and later repeating the treatment using corona, the printability of the skin surface may be returned to an excellent level.

**Table 1.**

| Parameter | Value | Unit |
|---|---|---|
| Temperature at the skin surface | 805 | °C |
| Mixture Intensity | 40 | Nmc/h |
| Treater Roll Temperature | 14 | °C |
| Flame Intensity | 5 | kcal/m² |

The various aspects of the invention are further illustrated by the following numbered items.

### Numbered items 1.1-1.19

1.1. A machine direction oriented multilayer facestock for labels, the facestock comprising a core layer having a first surface and a second surface, a first skin layer adjoined to the first surface of the core layer and a second skin layer adjoined to the second surface of the core layer, wherein the composition of the first skin layer is different from the composition of the second skin layer, and wherein the second skin layer is configured to be in contact with the adhesive layer, said second skin layer comprising:
   propylene homopolymer;
   hydrocarbon resin;
   styrene block copolymer; and
   low density polyethylene.
1.2. The machine direction oriented multilayer facestock according to item 1.1, wherein the second skin layer comprises between 20 and 60% propylene homopolymer.
1.3. The machine direction oriented multilayer facestock according to item 1.1 or 1.2, wherein the second skin layer comprises between 5 and 20% hydrocarbon resin.
1.4. The machine direction oriented multilayer facestock according to any of the items 1.1 to 1.3, wherein the second skin layer comprises styrene block copolymer between 5 and 20%.
1.5. The machine direction oriented multilayer facestock according to any of the items 1.1 to 1.4, wherein the second skin layer comprises between 1 and 20% of low density polyethylene.
1.6. The machine direction oriented multilayer facestock according to any of the items 1.1 to 1.5, wherein the second skin layer further comprises linear low density polyethylene.
1.7. The machine direction oriented multilayer facestock according to item 1.6, wherein the second skin layer comprises between 10 and 30% of a linear low density polyethylene.
1.8. The machine direction oriented multilayer facestock according to any of the items 1.1 to 1.7, wherein the second skin layer further comprises an antiblocking agent.
1.9. The machine direction oriented multilayer facestock according item 1.8, wherein the second skin layer comprises between 0.05 and 0.5% antiblocking agent.
1.10. The machine direction oriented multilayer facestock according to any of the preceding items, wherein the first skin layer comprises propylene homopolymer; and linear low density polyethylene.
1.11. The machine direction oriented multilayer facestock according to item 1.10, wherein the first skin layer comprises between 40 and 80% of a propylene homopolymer.
1.12. The machine direction oriented multilayer facestock according to item 1.10 or 1.11, wherein the first skin layer comprises between 10 and 50% of a linear low density polyethylene.
1.13. The machine direction oriented multilayer facestock according toany of the items 1.10 to 1.12, wherein the first skin layer further comprises antiblocking agent.
1.14. The machine direction oriented multilayer facestock according to the item 1.13, wherein the first skin layer comprises between 0.05 and 0.5% of an antiblocking agent.
1.15. The machine direction oriented multilayer facestock according to any of the preceding items, wherein the facestock has a tensile modulus ratio of machine direction to transversal direction between 2.0 and 3.8.
1.16. The machine direction oriented multilayer facestock according to any of the preceding items, wherein the thickness of the first skin layer is different from the thickness of the second skin layer and the thickness ratio of the first skin layer to second skin layer is between 1:1 and 1:2.
1.17. A use of a machine direction oriented multilayer facestock according to any of the preceding items for self-adhesive labels.
1.18. A self-adhesive label comprising an adhesive layer and a machine direction oriented multilayer facestock comprising at least a core layer having a first surface and a second surface, a first skin layer adjoined to the first surface of the core layer and a second skin layer adjoined to the second surface of the core layer, wherein the composition of the first skin layer is different from the composition of the second skin layer, and wherein the second skin layer is configured to be in contact with the adhesive layer, said second skin layer comprising:
   propylene homopolymer;
   hydrocarbon resin;
   styrene block copolymer; and
   low density polyethylene.
1.19. A method for manufacturing a machine direction oriented multilayer facestock for labels, the facestock comprising a core layer having a first surface and a second surface, a first skin layer adjoined to the first surface of the core layer and a second skin layer adjoined to the second surface of the core layer, the method comprising:
   - forming a facestock, wherein the chemical composition of the first skin layer is different from the chemical composition of the second skin layer, said second skin layer comprising propylene homopolymer, hydrocarbon resin, styrene block copolymer, and low density polyethylene;
   - stretching the facestock in machine direction by a longitudinal force by a first roll and a second roll at a stretch ratio of 4:1 to 8:1, wherein the first roll is arranged to be in contact with the first skin layer of the facestock and the second roll is arranged to be in contact with the second skin layer of the facestock and wherein temperature of the first roll is lower than temperature of the second roll.

### Numbered items 2.1-2.11

2.1. A machine direction oriented multilayer facestock for labels, the facestock comprising a core layer having a first surface and a second surface, a first skin layer adjoined to the first surface of the core layer and a second skin layer adjoined to the second surface of the core layer, wherein the first skin layer is configured to be in contact with the print layer and the second skin layer is configured to be in contact with the adhesive layer, and wherein the thickness of the first skin layer is 10 to 90% of the thickness of the second skin layer.
2.2. The machine direction oriented multilayer facestock according to item 1, wherein the thickness of the first skin layer is 20 to 50% of the thickness of the second skin layer.
2.3. The machine direction oriented multilayer facestock according to item 2.1 or 2.2, wherein the composition of the first skin layer is different form the composition of the second skin layer and wherein the content of linear low density polyethylene in the second skin layer is between 0 and 50 % of the content of linear low density polyethylene in the first skin layer.
2.4. The machine direction oriented multilayer facestock according to any of the items 2.1 to 2.3, wherein the content of propylene homopolymer in the second skin layer is between 50 and 120% of the content of propylene homopolymer in the first skin layer.
2.5. The machine direction oriented multilayer facestock according to any of the items 2.1 to 2.4, wherein second skin layer further comprises between 1 and 20% low density polyethylene.
2.6. The machine direction oriented multilayer facestock according to any of the items 2.1 to 2.5, wherein the second skin layer further comprise between 5 and 20% hydrocarbon resin.
2.7. The machine direction oriented multilayer facestock according to any of the items 2.1 to 2.6, wherein the second skin layer further comprises between 5 and 20% styrene block copolymer.
2.8. The machine direction oriented multilayer facestock according to any of the items 2.1 to 2.7, wherein the ratio of the machine direction tensile modulus to the transversal direction tensile modulus of the facestock is between 2.0 and 3.8.
2.9. Use of the machine direction oriented multilayer facestock according to any of the items 2.1 to 2.8 for self-adhesive labels.
2.10. A self-adhesive label comprising an adhesive layer and a machine direction oriented multilayer facestock comprising a core layer having a first surface and a second surface, a first skin layer adjoined to the first surface of the core layer and a second skin layer adjoined to the second surface of the core layer, wherein the first skin layer is configured to be in contact with the print layer and the second skin layer is configured to be in contact with the adhesive layer, and wherein the thickness of the first skin layer is 10 to 90% of the thickness of the second skin layer.
2.11. A method for manufacturing a machine direction oriented multilayer facestock for labels, the facestock comprising a core layer having a first surface and a second surface, a first skin layer adjoined to the first surface of the core layer and a second skin layer adjoined to the second surface of the core layer the method comprising:
   - forming a facestock, wherein the thickness of the first skin layer is 10 to 90% of the thickness of the second skin layer;
   - stretching the facestock in machine direction by a longitudinal force by a first roll and a second roll at a stretch ratio of 4:1 to 8:1, wherein the first roll is arranged to be in contact with the first skin layer of the facestock and the second roll is arranged to be in contact with the second skin layer of the facestock, and wherein temperature of the first roll is lower than temperature of the second roll.

### Numbered items 3.1-3.29

3.1. A machine direction oriented multilayer facestock for labels, the facestock comprising a core layer having a first surface and a second surface, and a first skin layer adjoined to the first surface of the core layer, the core layer comprising:
   propylene homopolymer;
   low density polyethylene;
   hydrocarbon resin; and
   styrene block copolymer.
3.2. The machine direction oriented multilayer facestock according to item 1, wherein the core layer comprises between 40 and 90% of propylene homopolymer of the weight of the core layer.
3.3. The machine direction oriented multilayer facestock according to item 3.1 or 3.2, wherein the core comprises between 1 and 20% of low density polyethylene of the weight of the core layer.
3.4. The machine direction oriented multilayer facestock according to any of the preceding items 3.1 to 3.3, wherein the core layer comprises between 5 and 20% of hydrocarbon resin of the weight of the core layer.
3.5. The machine direction oriented multilayer facestock according to any of the preceding items 3.1 to 3.4, wherein the content of styrene block copolymer is between 5 and 20% of the weight of the core layer.
3.6. The machine direction oriented multilayer facestock according to item 3.5, wherein the styrene block copolymer is at least one of the following styrene-ethylene-propylene-styrene or styrene-ethylene-butylene-styrene.
3.7. The machine direction oriented multilayer facestock according to any of the preceding items 3.1 to 3.7, wherein the first skin layer comprises:
   propylene homopolymer; and
   linear low density polyethylene.
3.8. The machine direction oriented multilayer facestock according to item 3.7, wherein the first skin layer comprises between 30 and 80% of propylene homopolymer of the weight of the first skin layer.
3.9. The machine direction oriented multilayer facestock according to item 3.7 or 3.8, wherein the first skin layer comprises between 10 and 50% of linear low density polyethylene of the weight of the skin layer.
3.10. The machine direction oriented multilayer facestock according to any of the items 3.7 to 3.9, wherein the first skin layer further comprises an antiblocking agent.
3.11. The machine direction oriented multilayer facestock according to item 3.10, wherein the first skin layer comprises between 0.05 and 0.5% of an antiblocking agent of the weight of the skin layer.
3.12. The machine direction oriented multilayer facestock according to any of the items 3.1 to 3.11, wherein the facestock further comprises a second skin layer adjoined to the second surface of the core layer.
3.13. The machine direction oriented multilayer facestock according to item 3.12, wherein the second skin layer comprises:
   propylene homopolymer;
   hydrocarbon resin;
   styrene block copolymer; and
   low density polyethylene.
3.14. The machine direction oriented multilayer facestock according to item 3.13, wherein the second skin layer comprises between 20 and 60% of propylene homopolymer of the weight of the skin layer.
3.15. The machine direction oriented multilayer facestock according to item 3.13 or 3.14, wherein the second skin layer comprises between 5 and 20% of hydrocarbon resin of the weight of the skin layer.
3.16. The machine direction oriented multilayer facestock according to any of the items 3.13 to 3.15, wherein the second skin layer comprises styrene block copolymer between 5 and 20% of the weight of the skin layer.
3.17. The machine direction oriented multilayer facestock according to any of the items 3.13 to 3.16, wherein the second skin layer comprises between 1 and 20% of low density polyethylene of the weight of the skin layer.
3.18. The machine direction oriented multilayer facestock according to any of the items 3.13 to 3.17, wherein the second skin layer further comprises linear low density polyethylene.
3.19. The machine direction oriented multilayer facestock according to item 3.18, wherein the second skin layer comprises between 10 and 30% of linear low density polyethylene of the weight of the skin layer.
3.20. The machine direction oriented multilayer facestock according to any of the items 3.13 to 3.19, wherein the second skin layer further comprises an antiblocking agent.
3.21. The machine direction oriented multilayer facestock according to item 3.20, wherein the second skin layer comprises between 0.05 and 0.5% of an antiblocking agent of the weight of the skin layer.
3.22. The machine direction oriented multilayer facestock film according to any of the preceding items, wherein the facestock is oriented 5:1 to 8:1 times in the machine direction.
3.23. The machine direction oriented multilayer facestock film according to any of the preceding items, wherein the facestock has a tensile modulus ratio of the machine direction to the transversal direction of the facestock between 2.0 and 3.8.
3.24. The machine direction oriented multilayer facestock film according to any of the preceding items, wherein the thickness of the core layer is 60 to 90% and the thickness of the first skin layer is 2 to 10% and the thickness of the second skin layer is 2 to 30% of the total thickness of the facestock.
3.25. The machine direction oriented multilayer facestock film according to any of the preceding claims, wherein the haze of the facestock prior to printing and overcoating of the facestock is between 20 and 35% according to the standard ASTM D1003.
3.26. The machine direction oriented multilayer facestock film according to any of the preceding items, wherein the haze of the facestock after printing and overcoating of the facestock is between 2 and 6% according to standard ASTM D1003.
3.27. Use of the facestock according to any of the items 3.1 to 3.26 for self-adhesive labels.
3.28. A self-adhesive label including an adhesive layer and a machine direction oriented multilayer facestock comprising at least a core layer having a first surface and a second surface and a first skin layer adjoined to the first surface of the core layer, and wherein the adhesive layer is attached to the second surface of the core layer, said core layer comprising:
   propylene homopolymer;
   low density polyethylene;
   hydrocarbon resin; and
   styrene block copolymer.
3.29. A method for manufacturing a machine direction oriented multilayer facestock for labels, the facestock comprising a core layer having a first surface and a second surface, and a first skin layer adjoined to the first surface of the core layer, the method comprising:
   - forming a facestock, wherein the core layer comprises propylene homopolymer, low density polyethylene, hydrocarbon resin, and styrene block copolymer;
   - stretching the facestock in machine direction by a longitudinal force by a first roll and a second roll at a stretch ratio of 4:1 to 8:1.

### Numbered items 4.1- 4.15

4.1. A machine direction oriented facestock for labels, the facestock comprising at least a core layer having a first surface and second surface, a first skin layer adjoined to a first surface of the core layer and a second skin layer adjoined to the second surface of the core layer, wherein the tensile modulus ratio of the facestock is between 2.0 and 3.8, wherein the tensile modulus ratio is the ratio of the tensile modulus of the machine direction to the tensile modulus of the transversal direction.
4.2. The machine direction oriented facestock according to item 4.1, wherein the core layer comprises at least 40 % of propylene homopolymer of the weight of the layer.
4.3. The machine direction oriented facestock according to item 4.1, wherein the core comprises at least 60% of propylene homopolymer.
4.4. The machine direction oriented facestock according to item 4.1, wherein the core comprises between 40 and 80 % of propylene homopolymer.
4.5. The machine direction oriented facestock according to any of the items 4.1 to 4.4, wherein the thickness of the first skin layer is different from the thickness of the second skin layer.
4.6. The machine direction oriented facestock according to any of the items 4.1 to 4.5, wherein the chemical composition of the first skin layer is different from the chemical composition of the second skin layer.
4.7. The machine direction oriented facestock according to any of the items 4.1 to 4.6, wherein the first skin layer comprises between 30 and 80 % of propylene homopolymer.
4.8. The machine direction oriented facestock according to any of the items 4.1 to 4.7, wherein the second skin layer comprises between 20 and 80 wt-% of propylene homopolymer.
4.9. A method for manufacturing a machine direction oriented facestock for labels, the facestock comprising at least a core layer having a first surface and second surface, a first skin layer adjoined to a first surface of the core layer and a second skin layer adjoined to the second surface of the core layer, the method comprising:
   - forming a facestock, wherein the chemical composition of the first skin layer is different from the chemical composition of the second skin layer;
   - stretching the facestock in machine direction by a longitudinal force by a first roll and a second roll separated by a gap;
   - rotating the first roll; and
   - rotating the second roll in the same direction such that the speed of the surface of the second roll is different from the speed of the surface of the first roll,
   and wherein the first roll is arranged to be in contact with the first skin layer of the facestock, and the second roll is arranged to be in contact with the second skin layer of the facestock and wherein the longitudinal force is generated by:
   - a first surface friction between the first skin layer and the first roll; and
   - a second surface friction between the second skin layer and the second roll, said first surface friction and second surface friction balanced by:
   - selecting a temperature for the first roll with respect to the chemical composition of the first skin layer; and
   - selecting a temperature for the second roll with respect to the chemical composition of the second skin layer.
4.10. The method according to item 4.9, wherein the temperature of the first roll is lower than the temperature of the second roll, and the difference between the temperature of the first roll and the temperature of the second roll is smaller than 15°C.
4.11. The method according to any of the items 4.9 to 4.10, wherein
   - the speed of the surface of the second roll is between 5 and 8 times higher than the speed of the surface of the first roll; and
   - the stretching of the machine direction oriented facestock generates a first tensile modulus in the machine direction and a second tensile modulus in transversal direction, wherein the tensile modulus ratio of machine direction to transversal direction in the facestock is between 2.0 and 3.8.
4.12. The method according to any of the claims 4.9 to 4.11, wherein the forming is by coextrusion of the core layer and the skin layers.
4.13. The method according to any of the claims 4.9 to 4.12, wherein the distance of the gap is between 1 and 10 mm.
4.14. A use of the facestock according to any of the items 4.1 to 4.8 for self-adhesive labels.
4.15. A self-adhesive label including an adhesive layer and a machine direction oriented facestock comprising at least a core layer having a first surface and second surface, a first skin layer adjoined to a first surface of the core layer and a second skin layer adjoined to the second surface of the core layer, wherein the tensile modulus ratio of the facestock in machine direction to transversal direction is between 2.0 and 3.8.

### Numbered items 5.1- 5.18

5.1. A method for manufacturing a machine direction oriented facestock comprising at least a core layer having a first surface and second surface, a first skin layer adjoined to a first surface of the core layer and a second skin layer adjoined to the second surface of the core layer, the method comprising:
   - forming a facestock, wherein the chemical composition of the first skin layer is different from the chemical composition of the second skin layer;
   - stretching the facestock in machine direction by a longitudinal force by a first roll and a second roll separated by a gap;
   - rotating the first roll; and
   - rotating the second roll in the same direction such that the speed of the surface of the second roll is different from the speed of the surface of the first roll,
   wherein the first roll is arranged to be in contact with the first skin layer of the facestock, and the second roll is arranged to be in contact with the second skin layer of the facestock and wherein the longitudinal force is generated by:
   - a first surface friction between the first skin layer and the first roll; and
   - a second surface friction between the second skin layer and the second roll, said first surface friction and second surface friction being balanced by:
   - selecting a temperature for the first roll with respect to the chemical composition of the first skin layer; and
   - selecting a temperature for the second roll with respect to the chemical composition of the second skin layer.
5. 2. The method according to item 5.1, wherein the temperature of the first roll is lower than the temperature of the second roll, and the difference between the temperature of the first roll and the temperature of the second roll is smaller than 15°C.
5.3. The method according to item 5.1 or 5.2, wherein
   - the speed of the surface of the second roll is between 5 and 8 times higher than the speed of the surface of the first roll; and
   - the stretching of the machine direction oriented facestock generates a first tensile modulus in the machine direction and a second tensile modulus in transversal direction, wherein the tensile modulus ratio of machine direction to transversal direction in the facestock is between 2.0 and 3.8.
5.4. The method according to any of the items 5.1 to 5.3, wherein the forming is carried out by coextrusion of the core layer and the skin layers.
5.5. The method according to any of the items 5.1 to 5.4, wherein the distance of the gap is between 1 and 10 mm.
5.6. The method according to any of the items 5.1 to 5.5, wherein the core layer is located between the first skin layer and the second skin layer, and the core layer comprises:
   propylene homopolymer;
   low density polyethylene; and
   linear low density polyethylene.
5.7. The method according to item 5.6, wherein the content of linear low density polyethylene in the core layer is between 0.1 and 3.0% of the total polymer weight of the layer.
5.8. The method according to any of the items 5.1 to 5.7, wherein the first skin layer comprises:
   propylene homopolymer;
   linear low density polyethylene,
   and wherein the second skin layer comprises:
   propylene homopolymer;
   low density polyethylene; and
   linear low density polyethylene.
5.9. The method according to item 5.8, wherein the content of linear low density polyethylene in the first skin layer is at least 30% of the total polymer weight of the layer and the content of linear low density polyethylene in the second skin layer is at least 10% of the total polymer weight of the layer.
5.10. The method according to any of the items 5.1 to 5.9, wherein the core layer or the second skin layer further comprises:
   hydrocarbon resin, or
   styrene block copolymer.
5.11. The method according to any of the items 5.6 to 5.10, wherein the content of propylene homopolymer is at least 40% of the total polymer weight of the core layer, the content of propylene homopolymer is at least 40% of the total polymer weight of the second skin layer, and the content of propylene homopolymer is at least 30% of the total polymer weight of the first skin layer.
5.12. The method according to any of the items, wherein at least one of the skin layers further comprises an antiblocking agent.
5.13. The method according to any of the items 5.1 to 5.12, wherein the thickness of the first skin layer is different from the thickness of the second skin layer.
5.14. The method according to any of the items 5.1 to 5.13, further comprising:
   - producing free radicals by corona, flame or plasma discharge;
   - transferring the facestock at a velocity with respect to the corona, flame or plasma discharge,
   - exposing the first surface of the skin layer to the free radicals;
   - winding the machine direction oriented facestock to a roller for storage after exposing the first surface of the skin layer to the free radicals;
   - selecting the velocity such that the surface tension level of the first surface of the skin layer is higher than or equal to 38 mN/m.
5.15. A machine direction oriented facestock obtained by a method according to any of the items 5.1 to 5.14.
5.16. Use of a machine direction oriented facestock according to item 5.15 for self-adhesive labels.
5.17. An apparatus comprising a forming unit, a preheating unit and a stretching unit to produce a machine direction oriented facestock.
5.18. The apparatus according to item 5.17, further comprising a burning unit to produce free radicals, the stretching unit further comprising a first roll and a second roll separated by a gap, the first roll having a first temperature and a first rotation speed, the second roll having a second temperature and a second rotation speed, the first roll arranged to face the first skin layer of the facestock, the second roll arranged to face the second skin layer of the facestock and the first temperature arranged to be lower than the second temperature.

### Numbered items 6.1- 6.15

6.1. A method for treating a machine direction oriented facestock comprising a skin layer, said skin layer comprising less than 50% of linear low density polyethylene of the total polymer weight of the layer and more than 50% of propylene homopolymer of the total polymer weight of the layer, said method comprising:
   - producing free radicals, and
   - exposing a first surface of the skin layer to the free radicals.
6.2. The method according to item 6.1, wherein said free radicals are produced by corona, flame or plasma discharge.
6.3. The method according to item 6.1 or 6.2, further comprising:
   - transferring the facestock at a velocity with respect to the corona, flame or plasma discharge; and
   - selecting the velocity such that the surface tension level of the first surface of the skin layer is between 38 and 44 mN/m.
6.4. The method according to any of the items 6.1 to 6.3, wherein said free radicals are produced by a flame, the flame comprising an oxidizing zone, and the distance between the oxidizing zone and the first surface of the skin layer is smaller than or equal to 5 millimeters.
6.5. The method according to item 6.4, further comprising;
   - forming a mixture comprising fuel gas,
   - oxidizing the fuel gas of the mixture to produce the free radicals, and
   - selecting a mixing ratio of the mixture such that the surface tension level of the first surface of the skin layer is higher than or equal to 38 mN/m after 180 days from the treatment.
6.6. The method according to item 6.5, wherein said gas comprises methane, propane, butane or natural gas.
6.7. The method according to any of the items 6.1 to 6.6, further comprising:
   - stretching the facestock at a longitudinal force to produce the machine direction oriented facestock before exposing the first surface of the skin layer to the free radicals, and
   - winding the machine direction oriented facestock to a roller for storage after exposing the first surface of the skin layer to the free radicals
   - selecting the longitudinal force such that the tensile modulus ratio of the facestock is between 2.0 and 3.8, wherein the tensile modulus ratio is the ratio of the tensile modulus of the machine direction to the tensile modulus of the transversal direction generated by the stretching of the facestock.
6.8. The method according to any of the items 6.1 to 6.7, wherein the facestock comprises a first skin layer and a second skin layer, and wherein the chemical composition of the first skin layer is different from the chemical composition of the second skin layer.
6.9. The method according to any of the items 6.1 to 6.8, wherein the facestock comprises a first skin layer and a second skin layer, and wherein the thickness of the first skin layer is different from the thickness of the second skin layer.
6.10 The method according to any of the items 6.1 to 6.9, wherein the first skin layer comprises:
   - propylene homopolymer; and
   - linear low density polyethylene, and
   wherein the content of propylene homopolymer is between 30 percent and 60 percent of the total polymer weight of the layer; and
   - the second skin layer comprises:
   - propylene homopolymer;
   - low density polyethylene; and
   - linear low density polyethylene,
   wherein the content of propylene homopolymer is between 40 percent and 80 percent of the total polymer weight of the layer.
6.11. The method according to any of the items 6.1 to 6.10, wherein the facestock comprises a core layer between the first skin layer and the second skin layer, said core layer comprising:
   - propylene homopolymer, and
   - low density polyethylene,
   wherein the content of propylene homopolymer is between 40 percent and 80 percent of the total polymer weight of the layer.
6.12 The method according to any of the items 6.1 to 6.11, wherein at least one of the skin layers further comprises an antiblocking agent.
6.13. A machine direction oriented facestock obtained by any of the method according to the items 6.1 to 6.12.
6.14. An apparatus comprising a stretching unit, a facestock transfer unit and a burner unit for producing free radicals for treating a machine direction oriented facestock.
6.15. The apparatus according to item 6.14, further comprising a first roll and a second roll separated by a gap, the first roll having a first temperature and a first rotation speed, the second roll having a second temperature and a second rotation speed, the first roll being arranged to face the first skin layer of the facestock, the second roll being arranged to face the second skin layer of the facestock and the first temperature being arranged to be lower than the second temperature.

The embodiments described above are only example embodiments of the invention and a person skilled in the art recognizes readily that they may be combined in various ways to generate further embodiments without deviating from the basic underlying invention.

## Claims

1. A machine direction oriented multilayer facestock for labels, the facestock comprising a core layer having a first surface and a second surface, a first skin layer adjoined to the first surface of the core layer and a second skin layer adjoined to the second surface of the core layer, wherein the composition of the first skin layer is different from the composition of the second skin layer, and wherein the second skin layer is configured to be in contact with an adhesive layer, said second skin layer comprising:
propylene homopolymer;
hydrocarbon resin;
styrene block copolymer; and
low density polyethylene.

2. The machine direction oriented multilayer facestock according to claim 1, wherein the second skin layer comprises between 20 and 60% propylene homopolymer.

3. The machine direction oriented multilayer facestock according to claim 1 or 2, wherein the second skin layer comprises between 5 and 20% hydrocarbon resin.

4. The machine direction oriented multilayer facestock according to any of the claims 1 to 3, wherein the second skin layer comprises styrene block copolymer between 5 and 20%.

5. The machine direction oriented multilayer facestock according to any of the claims 1 to 4, wherein the second skin layer comprises between 1 and 20% of low density polyethylene.

6. The machine direction oriented multilayer facestock according to any of the claims 1 to 5, wherein the second skin layer further comprises linear low density polyethylene.

7. The machine direction oriented multilayer facestock according to claim 6, wherein the second skin layer comprises between 10 and 30% of a linear low density polyethylene.

8. The machine direction oriented multilayer facestock according to any of the claims 1 to 7, wherein the second skin layer further comprises between 0.05 and 0.5% of an antiblocking agent.

9. The machine direction oriented multilayer facestock according to any of the preceding claims, wherein the first skin layer comprises between 40 and 80% of a propylene homopolymer; and between 10 and 50% of a linear low density polyethylene.

10. The machine direction oriented multilayer facestock according to claim 9, wherein the first skin layer further comprises between 0.05 and 0.5% of an antiblocking agent.

11. The machine direction oriented multilayer facestock according to any of the preceding claims, wherein the facestock has a tensile modulus ratio of machine direction to transversal direction between 2.0 and 3.8.

12. The machine direction oriented multilayer facestock according to any of the preceding claims, wherein the thickness of the first skin layer is different from the thickness of the second skin layer and the thickness ratio of the first skin layer to second skin layer is between 1:1 and 1:2.

13. A use of a machine direction oriented multilayer facestock according to any of the preceding claims for self-adhesive labels.

14. A self-adhesive label comprising an adhesive layer and a machine direction oriented multilayer facestock comprising at least a core layer having a first surface and a second surface, a first skin layer adjoined to the first surface of the core layer and a second skin layer adjoined to the second surface of the core layer, wherein the composition of the first skin layer is different from the composition of the second skin layer, and wherein the second skin layer is configured to be in contact with the adhesive layer, said second skin layer comprising:
propylene homopolymer;
hydrocarbon resin;
styrene block copolymer; and
low density polyethylene.

15. A method for manufacturing a machine direction oriented multilayer facestock for labels, the facestock comprising a core layer having a first surface and a second surface, a first skin layer adjoined to the first surface of the core layer and a second skin layer adjoined to the second surface of the core layer, the method comprising:
- forming a facestock, wherein the chemical composition of the first skin layer is different from the chemical composition of the second skin layer, said second skin layer comprising propylene homopolymer, hydrocarbon resin, styrene block copolymer, and low density polyethylene;
- stretching the facestock in machine direction by a longitudinal force by a first roll and a second roll at a stretch ratio of 4:1 to 8:1, wherein the first roll is arranged to be in contact with the first skin layer of the facestock and the second roll is arranged to be in contact with the second skin layer of the facestock and wherein temperature of the first roll is lower than temperature of the second roll.

## Patentansprüche

1. Mehrschichtiges, in Maschinenrichtung ausgerichtetes, Etikettenträgermaterial,
wobei das Etikettenträgermaterial eine Kernschicht mit einer ersten Oberfläche und einer zweiten Oberfläche, einer ersten Hautschicht, die mit der ersten Oberfläche der Kernschicht verbunden ist, und einer zweiten Hautschicht, die mit der zweiten Oberfläche der Kernschicht verbunden ist, wobei die Zusammensetzung der ersten Hautschicht unterschiedlich ist von der Zusammensetzung der zweiten Hautschicht und wobei die zweite Hautschicht konfiguriert ist, um in Kontakt mit einer Haftschicht zu sein, wobei die zweite Hautschicht umfasst:
Propylen-Homopolymer;
Kohlenwasserstoffharz;
Styrol-Blockcopolymer; und
Polyethylen mit niedriger Dichte.

2. Mehrschichtiges, in Maschinenrichtung ausgerichtetes, Etikettenträgermaterial gemäß Anspruch 1, bei dem die zweite Hautschicht zwischen 20 und 60 % Polypropylen-Homopolymer umfasst.

3. Mehrschichtiges, in Maschinenrichtung ausgerichtetes, Etikettenträgermaterial gemäß Anspruch 1 oder 2, bei dem die zweite Hautschicht zwischen 5 und 20 % Kohlenwasserstoffharz umfasst.

4. Mehrschichtiges, in Maschinenrichtung ausgerichtetes, Etikettenträgermaterial gemäß Anspruch 1 bis 3, bei dem die zweite Hautschicht Styrol-Blockcopolymer zwischen 5 und 20 % umfasst.

5. Mehrschichtiges, in Maschinenrichtung ausgerichtetes, Etikettenträgermaterial gemäß Anspruch 1 bis 4, bei dem die zweite Hautschicht zwischen 1 und 20 % Polyethylen mit niedriger Dichte umfasst.

6. Mehrschichtiges, in Maschinenrichtung ausgerichtetes, Etikettenträgermaterial gemäß Anspruch 1 bis 5, bei dem die zweite Hautschicht weiterhin lineares Polyethylen mit niedriger Dichte umfasst.

7. Mehrschichtiges, in Maschinenrichtung ausgerichtetes, Etikettenträgermaterial gemäß Anspruch 6, bei dem die zweite Hautschicht zwischen 10 und 30 % eines linearen Polyethylens mit niedriger Dichte umfasst.

8. Mehrschichtiges, in Maschinenrichtung ausgerichtetes, Etikettenträgermaterial gemäß Anspruch 1 bis 7, bei dem die zweite Hautschicht weiterhin zwischen 0,05 und 0,5 % Antiblockmittel umfasst.

9. Mehrschichtiges, in Maschinenrichtung ausgerichtetes, Etikettenträgermaterial gemäß einem der voranstehenden Ansprüche, bei dem die erste Hautschicht zwischen 40 und 80 % eines Propylen-Homopolymers und zwischen 10 und 50 % eines linearen Polyethylens mit niedriger Dichte umfasst.

10. Mehrschichtige, in Maschinenrichtung ausgerichtete, Etikettenträgermaterial gemäß Anspruch 9, bei dem die erste Hautschicht weiterhin zwischen 0,05 und 0,5 % eines Antiblockmittels umfasst.

11. Mehrschichtiges, in Maschinenrichtung ausgerichtetes, Etikettenträgermaterial gemäß einem der voranstehenden Ansprüche, bei dem das Etikettenträgermaterial ein Zugmodul-Verhältnis der Maschinenrichtung zur Querrichtung zwischen 2,0 und 3,8 hat.

12. Mehrschichtiges, in Maschinenrichtung ausgerichtetes, Etikettenträgermaterial gemäß einem der voranstehenden Ansprüche, bei dem die Dicke der ersten Hautschicht unterschiedlich von der Dicke der zweiten Hautschicht ist und das Dickenverhältnis der ersten Hautschicht zur zweiten Hautschicht zwischen 1:1 und 1:2 beträgt.

13. Verwendung eines mehrschichtigen, in Maschinenrichtung ausgerichteten, Etikettenträgermaterials gemäß einem der voranstehenden Ansprüche für selbsthaftende Etiketten.

14. Selbsthaftendes Etikett, umfassend eine selbsthaftendes Schicht und ein mehrschichtige, in Maschinenrichtung ausgerichtete, Etikettenträgermaterial, umfassend wenigstens eine Kernschicht mit einer ersten Oberfläche und einer zweiten Oberfläche, einer ersten Hautschicht, die mit der ersten Oberfläche der Kernschicht verbunden ist, und eine zweite Hautschicht, die mit der zweiten Oberfläche der Kernschicht verbunden ist, wobei die Zusammensetzung der ersten Hautschicht unterschiedlich von der Zusammensetzung der zweiten Hautschicht ist und wobei die zweite Hautschicht konfiguriert ist, um in Kontakt mit der Haftschicht zu sein, wobei die genannte zweite Hautschicht umfasst:
Propylen-Homopolymer;
Kohlenwasserstoffharz;
Styrol-Blockcopolymer und
Polyethylen mit niedriger Dichte.

15. Verfahren zur Herstellung eines mehrschichtigen, in Maschinenrichtung ausgerichteten, Etikettenträgermaterials, wobei das Etikettenträgermaterial eine Kernschicht mit einer ersten Oberfläche und einer zweiten Oberfläche, einer ersten Hautschicht, die mit der ersten Oberfläche der Kernschicht verbunden ist, und einer zweiten Hautschicht, die mit der zweiten Oberfläche der Kernschicht verbunden ist umfasst, wobei das Verfahren umfasst:
- Bilden ein Etikettenträgermaterial, bei dem die chemische Zusammensetzung der ersten Hautschicht unterschiedlich von der chemischen Zusammensetzung der zweiten Hautschicht ist, wobei die genannte zweite Hautschicht PropylenHomopolymer, Kohlenwasserstoffharz, Styrol-Blockpolymer und Polyethylen mit niedriger Dichte umfasst;
- Strecken das Etikettenträgermaterial in Maschinenrichtung durch eine Längskraft durch eine erste Walze und eine zweite Walze in einem Streckverhältnis von 4:1 bis 8:1, wobei die erste Walze angeordnet ist, um in Kontakt mit der ersten Hautschicht des Etikettenträgermaterials zu sein und die zweite Walze angeordnet ist, um in Kontakt mit der zweiten Hautschicht des Etikettenträgermaterials zu sein und wobei die Temperatur der ersten Walze niedriger als die Temperatur der zweiten Walze ist.

## Revendications

1. Pellicule frontale multicouche pour des étiquettes, orientée dans le sens machine, la pellicule frontale comprenant une couche centrale possédant une première surface et une deuxième surface, une première couche pelliculaire jointe à la première surface de la couche centrale et une deuxième couche pelliculaire jointe à la deuxième surface de la couche centrale, la composition de la première couche pelliculaire étant différente de la composition de la deuxième couche pelliculaire, et la deuxième couche pelliculaire étant configurée pour être mise en contact avec une couche adhésive, ladite deuxième couche pelliculaire comprenant :
un homopolymère de propylène ;
une résine d'hydrocarbure ;
un copolymère séquencé de styrène ; et
du polyéthylène basse densité.

2. Pellicule frontale multicouche orientée dans le sens machine selon la revendication 1, dans laquelle la deuxième couche pelliculaire comprend entre 20 et 60 % d'un homopolymère de propylène.

3. Pellicule frontale multicouche orientée dans le sens machine selon la revendication 1 ou 2, dans laquelle la deuxième couche pelliculaire comprend entre 5 et 20 % d'une résine d'hydrocarbure.

4. Pellicule frontale multicouche orientée dans le sens machine selon l'une quelconque des revendications 1 à 3, dans laquelle la deuxième couche pelliculaire comprend un copolymère séquencé de styrène entre 5 et 20 %.

5. Pellicule frontale multicouche orientée dans le sens machine selon l'une quelconque des revendications 1 à 4, dans laquelle la deuxième couche pelliculaire comprend entre 1 et 20 % du polyéthylène basse densité.

6. Pellicule frontale multicouche orientée dans le sens machine selon l'une quelconque des revendications 1 à 5, dans laquelle la deuxième couche pelliculaire comprend en outre du polyéthylène linéaire basse densité.

7. Pellicule frontale multicouche orientée dans le sens machine selon la revendication 6, dans laquelle la deuxième couche pelliculaire comprend entre 10 et 30 % d'un polyéthylène linéaire basse densité.

8. Pellicule frontale multicouche orientée dans le sens machine selon l'une quelconque des revendications 1 à 7, dans laquelle la deuxième couche pelliculaire comprend entre 0,05 et 0,5 % d'un agent antiblocage.

9. Pellicule frontale multicouche orientée dans le sens machine selon l'une quelconque des revendications précédentes, dans laquelle la première couche pelliculaire comprend entre 40 et 80 % d'un homopolymère de propylène ; et entre 10 et 50 % d'un polyéthylène linéaire basse densité.

10. Pellicule frontale multicouche orientée dans le sens machine selon la revendication 9, dans laquelle la première couche pelliculaire comprend en outre entre 0,05 et 0,5 % d'un agent antiblocage.

11. Pellicule frontale multicouche orientée dans le sens machine selon l'une quelconque des revendications précédentes, dans laquelle la pellicule frontale possède un rapport des modules de tension entre le sens machine et la direction transversale entre 2,0 et 3,8.

12. Pellicule frontale multicouche orientée dans le sens machine selon l'une quelconque des revendications précédentes, dans laquelle l'épaisseur de la première couche pelliculaire est différente de l'épaisseur de la deuxième couche pelliculaire et le rapport des épaisseurs entre la première couche pelliculaire et la deuxième couche pelliculaire se situe entre 1:1 et 1:2.

13. Utilisation d'une pellicule frontale multicouche orientée dans le sens machine selon l'une quelconque des revendications précédentes, pour des étiquettes auto-adhésives.

14. Étiquette auto-adhésive comprenant une couche adhésive et une pellicule frontale multicouche orientée dans le sens machine, comprenant au moins une couche centrale possédant une première surface et une deuxième surface, une première couche pelliculaire jointe à la première surface de la couche centrale et une deuxième couche pelliculaire jointe à la deuxième surface de la couche centrale, la composition de la première couche pelliculaire étant différente de la composition de la deuxième couche pelliculaire, et la deuxième couche pelliculaire étant configurée pour être mise en contact avec une couche adhésive, ladite deuxième couche pelliculaire comprenant :
un homopolymère de propylène ;
une résine d'hydrocarbure ;
un copolymère séquencé de styrène ; et
du polyéthylène basse densité.

15. Procédé de fabrication d'une pellicule frontale multicouche pour des étiquettes orientée dans le sens machine, la pellicule frontale comprenant une couche centrale possédant une première surface et une deuxième surface, une première couche pelliculaire jointe à la première surface de la couche centrale et une deuxième couche pelliculaire jointe à la deuxième surface de la couche centrale, le procédé comprenant le fait de :
- former une pellicule frontale dans laquelle la composition chimique de la première couche pelliculaire est différente de la composition chimique de la deuxième couche pelliculaire, ladite deuxième couche pelliculaire comprenant un homopolymère de propylène, une résine d'hydrocarbure, un copolymère séquencé de styrène et du polyéthylène basse densité ;
- étirer la pellicule frontale dans le sens machine en appliquant une force longitudinale via un premier rouleau et un deuxième rouleau à un rapport d'étirage de 4:1 à 8:1, le premier rouleau étant disposé pour entrer en contact avec la première couche pelliculaire de la pellicule frontale et le deuxième rouleau étant disposé pour entrer en contact avec la deuxième couche pelliculaire de la pellicule frontale, et la température du premier rouleau étant inférieure à la température du deuxième rouleau.
